# EUROPEAN PATENT APPLICATION

(11) **EP 3 848 872 A1**
(43) Date of publication of application: **14.07.2021**
(21) Application number: 21156551.0
(22) Date of filing: 27.06.2013
(51) Int. Cl.: G06Q 20/02, G06Q 20/38

(54) **SECURE PAYMENT SYSTEM**

(30) Priority: 27.06.2012 US 201261664972 P
(62) Divisional of application: 13174162.1
(71) Applicant: MONERIS SOLUTIONS CORPORATION, Toronto Ontario M8X 2X2 (CA)
(72) Inventor: Ali, Shem, Toronto, Ontario M8X 2X2 (CA); Reynolds, Caleb, Toronto, Ontario M8X 2X2 (CA); Tolomiczenko, Nick, Toronto, Ontario M8X 2X2 (CA); Brandt, Christopher, Toronto, Ontario M8X 2X2 (CA); Matar, Amer, Toronto, Ontario M8X 2X2 (CA); Patterson, Andrew, Toronto, Ontario M8X 2X2 (CA)
(74) Representative: Altmann Stößel Dick Patentanwälte PartG mbB

(57) **Abstract**

A method for facilitating secure payment for a transaction comprises generating, at a customer device, an encrypted token for presentation to a merchant device as an optically scannable indicia for use in authenticating a transaction without exposing customer payment information to a merchant, at a payment processing server, storing payment information of a customer in a secure customer database, receiving, at said payment processing server, signals representing transaction information from a merchant device, the transaction information comprising purchase information and scanned indicia data representative of the encrypted token and omitting the payment information of the customer, retrieving said payment information from said secure customer database based on the scanned indicia data representative of the encrypted token, sending, by said payment processing server to an account processing resource, signals representing an authorization request, the authorization request including data corresponding to at least a portion of the transaction information and the payment information of the customer, receiving, at the payment processing server, signals representing an authorization response indicating whether the authorization request has been approved, and sending signals corresponding to the authorization response to at least one of the merchant device and the customer device, wherein at least a portion of the transaction information is received from the customer device via the merchant device, or from the merchant device via the customer device using a scanner, Bluetooth, NFC, Wi-Fi, or IR.

## Description

### CROSS-REFERENCE TO RELATED APPLICATIONS

This application claims priority to U.S. Provisional Patent Application No. 61/664,972, filed on June 27, 2012, and entitled "SECURE PAYMENT SYSTEM", the entirety of which is hereby incorporated by reference.

### TECHNICAL FIELD

The disclosure relates generally to electronic processing of transactions and, more specifically, to secure methods of tracking, providing, facilitating, and controlling sales, payment, rewards, promotions, and inventory processes.

### DISCLAIMER

This application contains material describing systems, methods, and machine-readable program media useful for processing payments in consumer retail and other commercial transactions. The processing of such payments, and associated transfer of funds between entities and jurisdictions is in some cases regulated by governmental and other agencies. The disclosure herein is made solely in terms of the application of logical, technical, and economic possibilities, without regard to possible statutory, regulatory, or other legal considerations. Nothing herein is intended as a statement or representation that any system, method or process proposed or discussed herein does or does not comply, either wholly or in part, with any statute, law, regulation, or other legal requirement in any jurisdiction; nor should anything herein be taken or construed as doing so.

A portion of the disclosure of this patent document may contain material which is subject to copyright protection. The copyright owner has no objection to the facsimile reproduction by anyone of the patent document or the patent disclosure, as it appears in the Patent Office files or records following publication, but otherwise reserves all copyrights whatsoever.

### BACKGROUND

In the past, most sales, and other commercial activities, were conducted in person at merchant or vendor locations. Then, as now, in conducting such activities, purchasers have typically provided payment for their purchases using paper money, cheques, or manually-processed credit cards. With the development of electronic networks, quicker and more efficient methods of processing payment have become possible. For example, electronic processing of credit cards has become feasible, as well as direct payment using bank cards and cash equivalent account cards, such as pre-paid cards, gift cards, or loyalty program cards.

In addition, commerce has shifted from being almost exclusively conducted in person to involve various types of electronic commerce enabled by widespread electronic networks, such as the Internet.

Mobile communication device technology has also progressed. Many mobile communication devices are now designed with functionality to provide more than just voice communications. Various forms of data and communications transmissions are now possible as well, such as text transmission using, e.g., the Short Message Service (SMS) data protocol. Many portable consumer devices are now also equipped with one or more antennae that provide connectivity to Local Area Networks (LAN) or Wide Area Networks (WAN) through a Wireless Access Point (WAP), such as over Wi-Fi.

The versatility of mobile communication devices has been increased still further through the emergence of program applications custom-designed to provide mobile devices with a broad range in functionality. Such program applications may be designed for any general purpose, such as reference, social networking, location-based services, productivity, and so on.

Areas in which it may be advantageous to continue development of mobile device technology include electronic commerce and transaction processing technologies.

### SUMMARY

In various aspects the invention provides system(s), method(s), and stored, machine-readable program data structures for secure processing of transactions over network communication infrastructure(s), such as the Internet, the public switched-telephone network (PSTN), cellular and/or other wireless networks, and other public and private communications networks. Using such system(s), method(s), and program structures, merchants and purchasers may complete transactions using one or more different types of electronic or virtual payment in a secure environment. Transactions between purchasers and merchants may be completed using one or more mobile communication devices that have been configured, for example, through installation of application software, to interface with a secure transaction environment. Such a mobile communication device may be configured to interact with a point-of-sale (POS) or point-of-transaction (POT) terminal located in a merchant store or, optionally, with one or more second mobile communication devices configured to operate in the secure transaction environment.

Alternatively, or additionally, personal and/or desktop computing devices, for example, including laptop and/or tablet-type devices, may be configured to interface with a secure transaction environment so as to complete transactions between purchaser and merchant from remote locations (e.g., locations other than a POS or POT terminal).

To provide security and protection for personal or sensitive purchaser information, such as credit card numbers or other financial and banking information, secure transaction environments according to the disclosure may provide for the use of encrypted tokens or other security features establishing identity or masking information from third-party interceptors.

In system(s) and method(s) according to the disclosure, for example, secure tokens that are linked with remotely- (e.g., centrally-) and securely-stored purchaser payment information may be exchanged and transmitted during transaction processing so as to avoid direct transmission of sensitive purchaser information. Use of encrypted tokens to represent payment information may, for example, help to reduce the frequency with which actual, potentially sensitive, purchaser financial data (encrypted or otherwise) is transmitted across communication network infrastructure where it may potentially be intercepted by malevolent or otherwise undesirable third parties. Additionally, use of encrypted tokens may eliminate or reduce the need for such potentially sensitive data to be stored at merchant locations, where security may not be adequate or liability may not be desired.

In this disclosure, the terms merchant, seller, and vendor may be used synonymously, unless otherwise clearly indicated or required by context. Similarly, in this disclosure, the terms purchaser and customer may be used synonymously, unless otherwise clearly indicated or required by context.

In accordance with one aspect of the present invention, there are provided methods, devices and systems for facilitating secure payment for a transaction. One such method includes: receiving, at a payment processing server, signals representing transaction information from at least one of a merchant device and a customer device, the transaction information comprising purchase information and customer information; retrieving from a secure customer database associated with the payment processing server, payment information associated with the customer information; sending, to an account processing resource, signals representing an authorization request, the authorization request including data corresponding to at least a portion of the transaction information and the payment information; receiving, at the payment processing server, signals representing an authorization response indicating whether the authorization request has been approved; and sending signals corresponding to the authorization response to at least one of the device associated with the merchant and the device associated with the customer.

Another method includes: sending to a payment processing server, signals representing transaction information from at least one of a merchant device and a customer device, the transaction information comprising purchase information and customer information, the customer information corresponding to payment information stored in a customer database accessible by the payment processing server; and receiving, at at least one of the merchant device associated and the customer device, signals corresponding to an authorization response generated by an account processing resource based on the payment information.

To enable use of encrypted tokens in a secure transaction environment, purchasers may make sensitive financial data, such as their credit card numbers, bank card or account numbers, and the like, available for storage in secure data sets controlled by one or more payment processing servers. Such secure payment processing server(s) may be equipped with one or more secure databases of purchaser information that may in some cases include one or more separate accounts for each registered purchaser. A secure data set representing information associated with a purchaser, which may alternatively be referred to as a purchaser's profile or as the purchaser's electronic wallet, or virtual wallet, can include or otherwise be associated with a name or other identification information associated with the purchaser, together with payment information representing one or more different forms or types of payment that the purchaser has been authorized to use. For example, each purchaser account data set may include one or more credit card numbers, one or more bank card numbers, one or more gift card numbers, or any other type of virtual payment associated with the purchaser. Access to such wallets may be controlled by any known or later-developed suitable means or techniques, including for example the use of user identifiers, secure passwords, and secure tokens, such as RSA codes.

Individual forms of payment associated with a purchaser may additionally be associated individually with one or more separate encrypted or encryptable data strings or identifiers, which may be used as or with tokens or surrogates for payment information, to facilitate secure payments in which the purchaser's actual account or payment information is not released to or otherwise accessible to the merchant or seller. Such tokens may be generated and used on a purchaser-specific or transaction-specific basis, or on any other basis consistent with the purposes described herein.

When a purchaser is to provide payment using an authorized account or form of payment, for example, the purchaser may transmit, or cause to be transmitted, an encrypted data string that serves as a token (e.g., a substitute or surrogate) for actual account and/or payment information. In order to process the desired payment, an encrypted data string, or token, may be passed from a device associated with the purchaser and/or a merchant POS/POT terminal or system to a secure processing server, together with other information providing specific details about the transaction (e.g., cost, merchant name, store location, etc.) and cross-referenced in a secure purchaser database maintained by the processing server to underlying financial information, e.g., credit card number. After the purchaser financial information has been accessed within the database, suitable transaction data may be processed with an issuing financial institution, such as the credit card company that issued the purchaser's credit card, the bank or savings company at which the purchaser has registered an account, the rewards and loyalty program administrator that issued the rewards card to the purchaser, and the like.

Thus, for example, a purchaser using a merchant POS device can cause information sufficient to enable a secure payment server to identify and access his or her payment account information, and to process payment for the transaction, to be passed through the merchant POS device to the secure payment server without exposing the purchaser's account or payment information to the merchant or other third parties in any way. Such information may be passed through the merchant POS device without being stored, archived, or cached, either permanently or only temporarily, and also without being registered, displayed, or made accessible in any other way.

Such a token or other secure data string may be wholly or partially generated specifically for a single transaction, after which the token or other secure data string may have no further purpose. Alternatively, such token or other secure data string may be wholly or partially a permanent or multi-use data string shared between the purchaser and the secure account server, which may be used for multiple, sequential transactions during the lifetime of the data string.

In some cases, permanent or multi-use data strings may be provided with an expiration condition that controls the useful lifetime of the data string for its intended functionality. Such expiration condition may be, for example, an expiration data after which a new data string may be generated for further transactions, or a maximum number of transactions that can be processed, and so on.

In addition to storage of credit card numbers, bank account numbers, and the like in purchaser-specific data sets (e.g., profiles or wallets) at the secure processing server, system(s) and method(s) according to the present disclosure may enable purchasers to purchase gift cards and other types of pre-paid account cards. Thus, participating merchants may offer such cards or accounts to purchasers, who may apply them toward purchases as payment within the secure transaction environment. In such cases, after a pre-paid account has been purchased, a purchaser profile data set (which may include or be included within a purchaser's virtual wallet) stored in a purchaser database may be updated to reflect a corresponding additional authorized payment type associated with that purchaser. If the purchaser then elects to provide payment for a purchase with that participating merchant, payment may be processed using the pre-paid account card previously purchased by the purchaser. For enhanced security, payment information may be exchanged and transmitted using tokens or other secure data strings linked to securely stored payment information in the purchaser database.

In various embodiments, payment processing servers in accordance with the disclosure may be configured to host, or otherwise access, control, or communicate with, databases of systems that store information useful for implementing, supporting, or otherwise facilitating purchaser loyalty programs. For example, such databases or systems can track historical purchase information for a given purchaser at a given vendor and apply various logic, or rules, sets to initiate, maintain, or modify certain rewards programs based on the historical purchase information.

In addition to databases comprising data sets representing purchaser information, one or more databases of merchant information may additionally be stored in, or otherwise communicatively associated with, secure processing servers for use in or with the described system(s) and method(s). Such merchant databases may be securely housed within a payment processing server and configured to store one or more accounts, or other data sets, associated with each merchant that is registered in the secure transaction environment. Stored information may include merchant names, numbers and/or locations of merchant stores, merchant financial account information, as well as information relating to different loyalty or rewards programs in which the merchant is participating, or otherwise offering. Further information stored in such merchant data sets may include timing and scheduling information relating to how and when merchants complete transactions processed according to the disclosed system(s) and method(s).

Using database(s) of merchant information, it is also possible using the disclosed system(s) and method(s) to provide tracking and control of inventory and merchandise for merchants. Thus, for example, for each transaction completed by a given merchant and processed in the secure payment server, the number and/or type of each good or service sold may be noted and recorded in a profile stored for that merchant. In such manner, inventory associated with a given merchant (or, e.g., a given location) may be tracked from transaction to transaction. Through provision of such service merchants can be notified when additional merchandise or inventory should be purchased, and/or provided with periodic reports indicating the quantities of merchandise available, sold, etc., over the previous time period(s). Other inventory tracking functions are also possible using the secure payment server.

In accordance with another aspect of the present invention, there are provided methods, devices and systems for facilitating inventory management and/or control. Transaction information can be generated at a merchant or customer device and may include, for example, (i) purchase information representing a list of to-be-purchased items (ii) vendor information representing the place of origin of the to-be-purchased items; and/or (iii) location/local stock from which item(s) are being delivered. Transaction information can be received at a payment processing server, wherein vendor information can be used as a lookup into a vendor database that stores a vendor profile including inventory information for one or more different entities operated by or associated with the vendor (e.g., different stores or retail outlets). Inventory information for the particular entity at which the transaction is proposed can be retrieved, updated and stored based on the purchase information so as to reflect updated inventory of that entity.

In accordance with another aspect of the present invention, there are provided methods, devices and systems for generating and managing virtual gift cards. Methods, device and systems described herein can be used to facilitate the purchase of a gift card. Transaction information can be stored at a secure payment host system to track and manage virtual gift card values redeemable at merchant, as well as terms, conditions, restrictions, or limitations of use. Transaction information can be sent to a payment processing server to generate a virtual gift card. Merchant and gift card information can associated with a customer and a merchant and can be stored in a database. Upon authorization, the gift card can be validated and the customer device can be notified. The validated gift card can be used from the customer's virtual wallet.

Further details of these and other aspects of the described embodiments will be apparent from the detailed description below.

### BRIEF DESCRIPTION OF THE DRAWINGS

Reference is now made to the accompanying drawings, in which:
FIG. 1 shows a schematic diagram of an embodiment of a system suitable for processing of secure payments in accordance with the disclosure.
FIG. 2 shows a schematic diagram of an embodiment of a secure payment host system in accordance with the disclosure.
FIGS. 3A and 3B show flow diagrams of secure payment process in accordance with the disclosure.
FIGS. 4A and 4B show flow diagrams of methods for processing of payments using virtual payment cards in accordance with the disclosure.
FIGS. 5A to 5E show schematic diagrams of embodiments of transactions in accordance with the disclosure.
FIGS. 6A to 6H show graphical user interfaces of an example embodiment of an application program operating on a purchaser device to provide secure payment in accordance with the disclosure.
FIG. 7 shows a schematic diagram of an embodiment of a device suitable for processing of secure payments in accordance with the disclosure.
FIGS. 8 and 9 show flow diagrams of methods for processing of payments using virtual payment cards in accordance with the disclosure.

### DETAILED DESCRIPTION OF THE PREFERRED EMBODIMENTS

Embodiments of the invention are described below with reference to the drawings.

In various embodiments, system(s) and method(s) according to the disclosure may be configured to perform the foregoing and additional functionalities, in various configurations and alternatives without limitation.

In one broad aspect, purchasers and merchants are enabled to initiate and complete secure transactions, including provision of secure payment(s) therefor. Accordingly, there are provided system(s) and method(s) for facilitating secure payments for transactions.

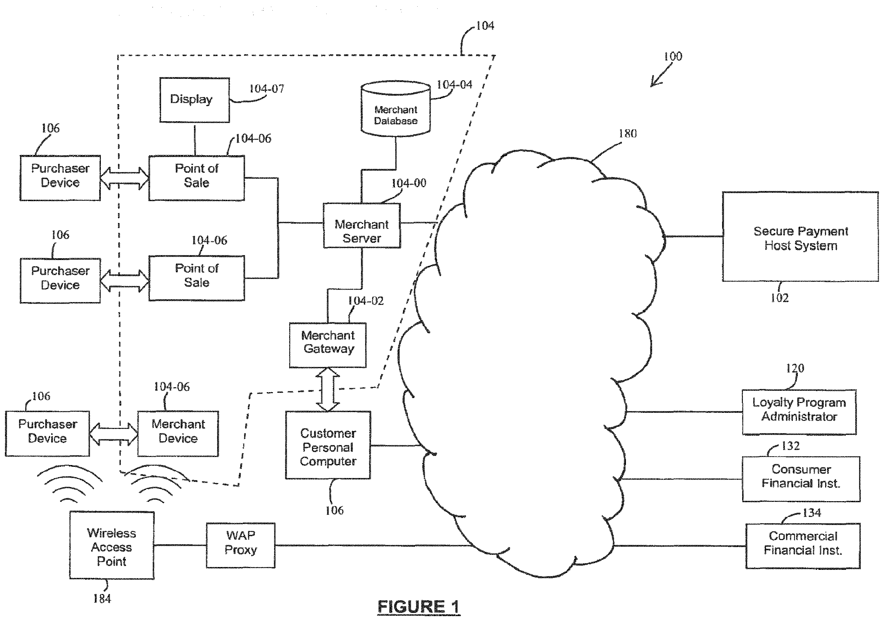

Referring initiation to FIG. 1, there is shown a schematic diagram of an embodiment of a secure payment and inventory control system 100 (referred to also as an "environment") for processing secure payments in accordance with the disclosure. In the embodiment shown, secure payment and inventory control system 100 comprises a secure payment host system 102 communicatively linked to a merchant system 104 over communications network 180; a third-party loyalty program or gift card administrator system 120; third-party financial institution systems 132, 134; and one or more directly and/or indirectly linked customer devices 106, 106'. As will be readily understood by those skilled in the relevant arts, in various embodiments, system 100 may comprise system(s) and device(s) 102, 104, 106, 106', 120, 132, 134, in various and unlimited numbers and combinations; and each system or device may be implemented using any suitable data processor(s) and supporting communications, data storage, and input/output or other ancillary subsystems or devices.

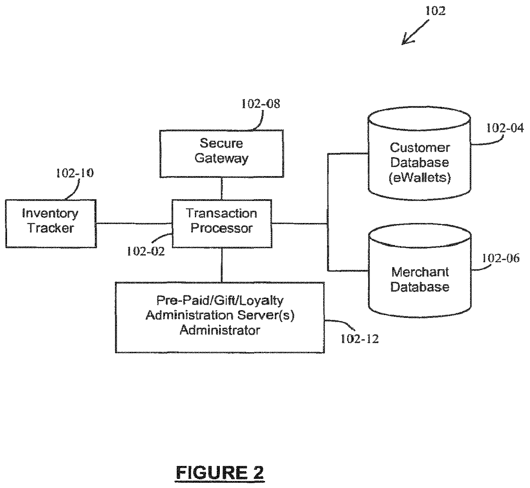

FIG. 2 shows a schematic diagram of an embodiment of a secure payment host system 102 suitable for use in implementing the system or environment 100 of FIG. 1. In the embodiment shown in FIG. 2, secure payment host system 102 comprises one or more transaction processors 102-02; customer databases 102-04 which store, for example, one or more segregated and secure purchaser data sets, such as virtual or e-Wallets); merchant databases 102-06; communications servers (or secure gateways) 102-08; merchant inventory tracking systems 102-10; and loyalty/gift/pre-paid account program administration servers or applications 102-12. As will be understood by those skilled in the relevant arts, upon a reading of this disclosure, various combinations of one or more components 102-02, 102-04, 102-06, 102-08, 102-10, and/or 102-12 may be used in implementing the invention(s) disclosed herein.

The particular organization of components in FIG. 2 may also be for illustrative purposes only and, in various embodiments, different organizations of components may be possible as well without loss of generality or functionality. For example, without limitation, one or more of such components may be combined with each other or, alternatively, eliminated altogether.

Communication network 180 (providing communications between secure payment host system 102 and some or all of the various systems 104, 106, 106', 120, 132, 134) may be implemented using any system(s), or combinations of systems, which are compatible with the purposes disclosed herein. For example, with reference to FIG. 1, communication network 180 may include the Internet, PSTN, cellular and/or other wireless networks 184, and/or other public and private communications networks. As will be readily understood by those skilled in the relevant arts, such communications may be implemented using any protocols, languages, or formats compatible with the purposes disclosed herein, including for example the financial exchange protocol (FIX), in combination with user wireless communications protocols, such as short message service (SMS).

In the embodiment shown in FIG. 1, merchant or vendor system 104 comprises one or more servers 104-00, gateways 104-02, databases 104-04, and POS devices 104-06. One or more systems 104, and/or its various components, may be provided at one or more merchant locations. For example, a complete system 104 comprising a single POS device 104-06 may be located in a single store; a complete system 104 comprising multiple POS devices 104-06 may be located in a single, larger store; or a system 104 comprising one or more servers 104-00 may be geographically dispersed, with remote- and/or co-located POS systems 104-06 located in multiple stores. Optionally, or in addition, one or more merchant servers 104-02 may provide access for remote customer systems 106' via a communications network 180, such as the Internet.

Purchaser (or customer) systems 106 may comprise any one or more devices suitable for accomplishing the purposes disclosed herein. For example, a system 106 used by or otherwise associated with a purchaser may comprise a laptop, tablet, desktop, or other computing device, and/or one or more mobile communications devices, such as a smart phone, personal data assistant (PDA), tablet computer, etc.

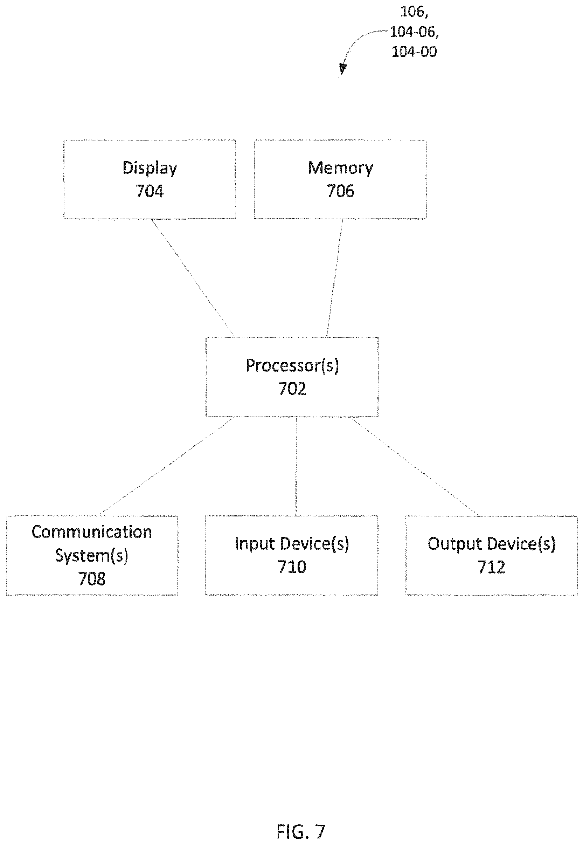

Fig. 7 shows an example embodiment of a consumer or merchant device 106, 104-06, 104-00, etc. suitable for accomplishing the purposes disclosed herein. The device can, for example, include one or more display(s) 704, memory(ies) 706, communication system(s) 708, input device(s) 710, and/or output device(s) 712 connected to one or more processor(s) 702. Memories 706 can include one or more RAMs, ROMs, EEPROMs, registers, flash memories, removable memories, hard drives, solid state disks, or any other transient and/or permanent memories suitable for storing computer-readable instructions/software modules or data. Communication system(s) may include transmitters, receivers, digital signal or other processors, antennas, memories, RF circuitry, communications modules or any other components for establishing communications with the device. Example communications systems can include systems for communicating overWi-Fi, Bluetooth, Ethernet, cellular networks, infrared, USB, NFC or any other suitable wired or wireless communication means. Input devices 710 can include, for example, keypads, touchpads, mice, keyboards, microphones, accelerometers, imaging devices, touchscreens, proximity sensors, GPS, QR/barcode or RFID scanners, card readers and the like. Output devices 712 can include, for example, speakers, lights, buzzers, and the like.

Software modules stored in one or more memories 706 or otherwise, can include transient and/or persistently-stored computer-readable code which can be executed by one or more processors to provide overall operation of the device its components. Software modules can be in any form, can be organized in any manner, and can include, for example, operating systems, applications, communication modules, security modules, firmware, or modules for handling inputs or outputs or any other device component.

The processor(s) 702 can be configured by the software modules or otherwise to perform/enable any aspect of the methods, systems and devices described herein.

In some examples, systems or devices can include one or more wallet applications, merchant applications, security modules, or other code for facilitating secure payment for a transaction.

A single secure payment host system 102 may interact with one or multiple merchant systems 104. Where a single secure payment host system 102 interacts with multiple merchant systems 104, one or more distinct or otherwise segregated merchant databases may be provided, so that data representing one merchant's information is not available to or otherwise accessible by other merchants or non-authorized parties.

Similarly, a single merchant system 104 may interact with one or any number of purchaser devices (or systems) 106.

Exchanges of transaction data and other information may take place between purchaser devices 106 and merchant/vendors 104 or merchant/vendor POT or POS systems 104-06, whereby at least one of merchant and purchaser provides information useful for completion of a transaction to the other party. Thus, in some cases, a purchaser may provide information (e.g., payment information) via a device 106 to the vendor sufficient to complete the transaction, while in the same and/or other cases the vendor may provide information (e.g., transaction information) via a POS or other merchant device 104-06 to the purchaser. In still further cases, both the purchaser and the vendor provide information (complete or partial) required to complete the transaction.

In any case, at least one of the vendor's and purchaser's systems or devices 104, 106, or both, acquires or generates a data set which can represent a combination of purchase information and purchaser information. Purchase information may include a whole or partial list, or a summary or total, with cost, of items to be purchased by the purchaser. Purchaser information may represent a selected form of payment for the purchaser to use in purchasing the selected items. Together, the combination of purchase and purchaser information ("transaction information") may represent a complete, or nearly complete, data set representing a transaction between purchaser and merchant. In some cases, as explained further below, merchant information may also be included in such data set.

Such generated or acquired transaction information may be sent by either the merchant system 104 or the purchaser device 106, or some combination thereof, to a secure payment processing server 102, wherein one or more actions to securely process the transaction may be executed. For example, with reference to FIG. 2, purchaser information provided as part of the transaction information may be used as a lookup into a secure purchaser database 102-04 comprising one or more purchaser-specific data sets representing a segregated or otherwise secure, dedicated "virtual wallet" associated with the purchaser.

In some embodiments, such a purchaser-specific data set may, for example, comprise a purchaser profile, including payment information for one or more different pre-specified payment methods associated with the purchaser (e.g., credit card numbers, debit card numbers, bank account numbers, gift cards, pre-paid cards). Actual payment information corresponding to the purchaser's selected form of payment may be retrievable from the purchaser database for use in processing transactions completed by the purchaser.

Secure payment server 102 may be configured to generate and transmit an authorization request, including purchaser and merchant identification information, as well as information identifying a form of payment (e.g., credit card, debit card, or other selected method of payment), to a financial institution or other account processing server associated with the selected form of payment. For example, payment information associated with a transaction may be sent to a credit card company, bank, loyalty program administrator, or other third-party financial institution 120, 132, 134 for payment authorization. Thus, if payment by means of a credit card is selected by the purchaser, data or signals identifying the purchaser's credit card account and a purchase amount associated with the transaction may be sent to a third-party credit card transaction server for payment authorization. If the transaction is authorized by the financial institution or other account processor 120, 132, 143, data or signals representing a response message may be returned to the payment processing server 102, the data or signals indicating that the transaction has been authorized. The same or other acknowledgements may relayed to either or both of the requesting purchaser system 106 and/or vendor system 104 to complete the transaction.

In various embodiments, as for example where a secure payment host system 102 is operated by or on behalf of a credit card processor or other financial institution, some or all of the respective functionalities of secure payment host system 102 and financial institution(s) 120, 132, 134 can be wholly or partly combined.

Within secure environments such as that depicted at 100 in FIG. 1, different embodiments, variations, and further features may be provided. For example, access to a purchaser's virtual wallet within a secure customer database 102-04, and therefore generation and/or control of payment information stored therein, may be granted through a program ("wallet") application configured to operate on a purchaser device 106, 106'. Any or all of purchaser device(s) 106, 106' can be used to route data or signals representing purchase or other information to a payment processing server 102 directly, for example via a wireless access point 184 and/or communications network 180, or via a vendor system 104.

Among advantages offered by system(s), method(s), and other aspect(s) of the invention is secure storage, by secure payment system(s) 102, of information useful for allowing purchasers to complete consumer transactions without having to carry or otherwise make use of, or depend on, cash or physical account indicia, such as plastic cards. Such benefits and/or advantages may, for example, be accomplished by allowing purchasers to avail themselves of private, secure access to segregated, purchaser-specific data sets on secure storage such as an electronic 'vault' 102-06. Such segregated, secure, purchaser-specific data sets may be known as electronic or virtual wallets.

For example, a provider of a secure payment host system 102 may offer access via a web page or other publicly-accessible electronic portal to an application, resident within the host system 102, which enables purchasers to identify themselves and to create or register any accounts they may wish to access, during transactions, through the virtual wallet system.

For example, a purchaser wishing to set up a virtual wallet may access such a suitably-configured graphical user interface (GUI) through an Internet website using a customer personal computer 106', a mobile purchaser device 106, or through a vendor POS system 104-06. By using one or more suitably-configured input fields on an interactive GUI in conjunction with input devices such as keypads, keyboards, and pointing devices, a purchaser can provide any required or desired name, address, and account information, such as account numbers and/or financial institution information; and such information can stored in both physically and cryptically secure memory maintained and guarded by the secure payment host system 102.

Information pertaining to cash or cash-equivalent accounts, as well as customer rewards, loyalty, and/or gift or other pre-paid accounts can be registered in this way.

As a specific example, a user wishing to register a credit, debit, gift, or loyalty account at home can access a suitable interface through the Internet and use keyboards and other input devices peripheral to the system.

A user wising to register an account at the point of sale, immediately before, after, or during a transaction, can enter alphanumeric and other data at a vendor POS 104-06, can swipe a physical card through a card reader, or can tap a card equipped with radio frequency identification (RFID) communications devices.

Optionally, users wishing to register debit, credit, and benefits accounts such as gift cards and/or loyalty program accounts can be offered suitably-configured registration GUIs by the bank, financial institution, merchant, or rewards program administrator, for interfacing with the virtual wallet vault provider 102, for example using pass-through and/or URL referral and linking techniques as described herein.

Transaction and other data may be exchanged between purchaser devices 106, 106' and merchant system(s) 104 using radio frequency identification (RFID), card reader, keypad, keyboard and/or other exchange technology associated with one or more vendor point of sale (POS) systems 104-06.

Payment signals in such cases can be routed to vendor system(s) 104 for processing priorto transmission to corresponding payment processing servers 102 (and thereafter optionally third-party systems 120, 132, 134), or optionally through secure pass-through processes in which communications hardware associated with vendor system 104 receives and transmits the payment signals to secure payment host system(s) 102 without allowing the vendor system 104 to store or access the data in such a way that the vendor system 104 might in any way access or otherwise acquire, even temporarily, any purchaser payment or account information. Systems for enabling such pass-through processes are sometimes called secure payment pipelines.

Encrypted and other tokens may be used in order to enhance security in the exchange and transmission of sensitive information, and/or to increase the efficiency of data exchange processes in accordance with the disclosure. Accordingly, purchasers and vendors may exchange information using any suitable type of encrypted tokens, e.g., quick response (QR) codes, barcodes, Bluetooth, RFID codes, card readers, etc. Alternatively, exchanged information may be formatted in plain/ted text or other identification (ID) number(s) embedded in transaction data strings, particularly, for example, where ted pass-through communications pipelines are used to transmit information acquired through merchant POT systems directly to secure payment servers.

ted tokens suitable for use in implementing various aspects of the disclosure may be generated by, or at, or originate from, different devices or terminals. For example, in some cases, an encrypted token (e.g., representing a selected form of authorization and/or payment) can be generated by a purchaser device 106, 106' and passed to a vendor POS system 104-06 directly, or via a payment processing server 104. In other cases, encrypted tokens (e.g., representing transaction information) can be generated by a vendor POS system 104-06 and passed to a purchaser mobile device 106 and/or payment processing server 102 for confirmation and/or processing. In still other cases, encrypted tokens can be generated at a payment processing server 102 and passed to a purchaser device 106, 106' and/or vendor system 104 for confirmation and/or processing.

In various embodiments real-time or pseudo real-time (synchronous or asynchronous) connectivity and/or interactivity may be provided between, for example, a purchaser mobile device 106 and a vendor POS system 104-06 so that, e.g., receipts, lists, records of purchased items may be generated ('built') on either or both of the purchaser mobile device 106 and the vendor system 104 during processing of a transaction. Thus, as a vendor POS system 104-06 processes different items being purchased, data representing those items may appear sequentially on a display of a purchaser mobile device 106.

Such lists and receipts can, for example, be generated using QR or bar-code scanners and/or other input devices provided at either the merchant/vendor POS 104-06 or the purchaser device 106. For example, scanners associated with either a purchaser mobile device 106 or a merchant POS system, or both, can be used to scan QR or bar codes associated with purchased items and thereafter forward associated data for processing as part of a transaction. Scanned information can be passed directly from the purchaser system 106 to the merchant system 104, or may be transmitted via a secure payment host system 102 if, for example, customer privacy or security is desired independent of merchant system(s) 104.

Optionally, once a transaction has been authorized and processed ('completed'), electronic receipt data may be securely provided to any number of different message addressees (entities/devices/locations), e.g., the vendor POS terminal 104-06, but also the purchaser mobile device 106 and/or an email or other account associated with the purchaser. For example, available message addresses associated with a purchaser may be stored in databases maintained and/or otherwise controlled by purchaser system(s) 106' and/or a secure purchaser data set stored in a secure database 102-04.

Completed transactions may closed at or near the time of the transaction, or, alternatively, after the fact (e.g., through application of end-of-day reconciliation and transfer processes). Closing of transactions may, for example be completed by communication(s) between a secure payment server 102 and a third-party server 120, 132, 143 operated by or on behalf of, for example, a bank, credit card issuer, or other financial institution.

Thus, in various embodiments, there may be temporal or other separation between transaction authorization and completion. For example, where a third-party financial institution 120, 132, 134 is required to authorize payment or other completion of a transaction, a response provided by the third-party financial system 120, 132, 134 may indicate ahead of closing that the proposed transaction is authorized for 'completion'. Pre-authorization may allow the purchaser to take custody or control of goods or services being purchased, even though account processors 102, 120, 132, 134 do not actually process ('close') the transaction until a later point in time, e.g., at the end of the business day. With delay transaction closing, vendor system 104 may in some cases make batch transmission of all the authorized transactions for the day back to the financial institution(s) 102, 120, 132, 134 for processing.

In some embodiments, merchants are enabled to outsource one or more different functions related to inventory tracking and control, and/or other business operations, to a third party server, such as a payment processing server 102. Accordingly, there are provided system(s) and method(s) for remote monitoring, tracking, and control of vendor inventory. In such systems and methods, transaction information generated at a point of sale, either by a merchant device 104-06 or by a purchaser device 106, 106', or both, may include any one of more of: (i) purchase information representing a list of to-be-purchased items; (ii) vendor information representing the place of origin of the to-be-purchased items; or (iii) location/local stock from which such item(s) are being delivered.

Transaction information of this kind may be transmitted from one or the other merchant 104 and/or purchaser 106 to a payment processing server 102, wherein one or more functions relating to tracking of inventory may be scheduled and/or completed. For example, vendor information received as part of the transaction information may be used by an inventory tracker application 102-10 as a lookup into vendor database(s) 102-06 that store one or more vendor data sets comprising, for example, suitable identifier and profile data associated with a vendor, and inventory information associated one or more different entities operated by or associated with the vendor (e.g., different stores, retail outlets, supply lines, etc.).

Inventory information associated with a particular entity or location at which a proposed transaction is occurring may be retrieved and, as desired, updated based on the purchase information so as to thereby reflect updated inventory associated with that entity, and then optionally stored in a corresponding data set of the vendor database(s) 102-06. In some cases, such as at the election of a vendor, inventory information retrieved from the vendor database(s) 102-06 will not be updated for the purposes of tracking inventory, and instead may be updated only for the purpose of tracking historical purchases. Thus, while a vendor may not necessarily rely on the information stored in the vendor databases to track and monitor current inventory levels at the vendor location, it may be possible to track historical purchase information. Thereby the vendor may be provided with periodic reports or updates reflecting purchases over the previous time period, which reports or updates may be useful to the vendor in planning and/or completing additional inventory purchases, closing down or expanding certain product lines, and other useful functions.

In other embodiments, inventory tracker 102-10 may use inventory data may to partially or fully control inventory intake, out-go, and re-ordering.

Transaction information may be processed on, or by, a payment processing server 102, with confirmation being sent to point of transaction 104-06. So as to process the transaction information, any of the above described processes may be utilized, such as accessing a purchaser database 102-04 of information and, based on retrieved purchaser payment information, initiating an authorization request to a financial institution 120, 132, 134 or other account processor. If and when authorized, signals or data representing a response message may then be sent back to a purchaser device 106, 106' and/or vendor system 104 confirming processing of the transaction.

Various further embodiments provide further features. For example, if and when new inventory is received at one of the vender's entities, the vendor may transmit an update message to the payment processing server 102 to update records in the vendor database 102-06 to reflect the newly acquired inventory. In some cases, a vendor may also pre-define different alerts in the vendor database 102-06, or elsewhere, that may be used to alert the vendor when inventory levels fall below selected thresholds, e.g., which indicate to the vendor that it may be time to order new supply (when inventory drops below the specified threshold level, payment processing server may transmit a message to the vendor instructing order of new supply). Alerts may similarly be generated, for example, if a sufficient quantity of goods or merchandise has been sold within a particular time period, suggesting to the merchant that inventory(ies) of that item may now be running low and that it consequently may be time to order new supply.

In further embodiments, gifts cards and other pre-paid accounts may be generated and/or validated to a purchaser account maintained in secure purchaser database(s) 102-04. In the same or other embodiments, customer loyalty programs and accounts and account information may be generated and/or maintained by secure host processor(s) 102.

Accordingly, there are provided system(s) and method(s) for operating electronically-processed pre-paid account cards. In such system(s) and method(s), information sufficient to complete a transaction for the purchase of a pre-paid account card, and/or to apply such card toward whole or partial payment in a transaction, may be exchanged between a purchaser system 106, 106' and an issuing merchant 104, wherein the exchanged information may include at least the following: (i) purchaser information representing the identity of the purchaser, (ii) merchant information representing the identity of the merchant, and (iii) card information representing the amount of the pre-paid (e.g., virtual) gift card and any other relevant information, e.g., terms, conditions, restrictions, limitations, or the like (collectively referred to as "transaction information").

Combined transaction information may be sent from one other the other of purchaser system 106, 106' and merchant system 104 to payment processing server 102, wherein one or more functions to complete processing of the purchase may occur.

For example, the received merchant and gift card information may be used to generate a virtual gift card, e.g., which may be tied to a purchaser profile stored in a database 102-04 and/or a merchant profile stored in a database 104-06 at the payment processing server. Thus, after generation of the virtual card, it will be known that payment of the specified amount may be accepted by that or, optionally, other merchants during a later transaction, which such merchant(s) may then be able to apply against the available credit on the virtual gift card.

Based further on the received transaction information at the payment processing server, a purchaser profile stored in a purchaser database 102-04 may be modified (or if necessary created), and an entry for the gift or other pre-paid account may be added to the purchaser data set as an associated payment method for that purchaser. Optionally, one or more encrypted tokens to represent the pre-paid account as an authorized form of payment may be generated either at the same or a later time. Once a virtual card is added to the purchaser data set, an authorization response may be sent back to the purchaser system 106 and/or the merchant system 104, and a physical or virtual pre-paid card may then be validated on a vendor POS system 104-06 and/or purchaser mobile device 106. For example, an entry or icon in a program application running on a purchaser mobile device 106 may be added representing the newly purchased gift card. Thereafter the user may use this entry or icon to select the gift card as payment at the issuing merchant.

Payment for the pre-paid account may be provided by the purchaser to the issuing merchant for the amount of the account. Paper money or other legal tender may be used for payment, as well as any other type of payment, including secure payment according to the system(s) and method(s) described herein. Thus, in some cases, a purchaser may provide payment for the pre-paid account using one or another additional, already-authorized forms of payment registered in the purchaser's profile at the secure payment processing server.

Within such secure transaction environment, generation of loyalty and other awards benefits, and/or the application of previously- and/or simultaneously-awarded benefits toward a transaction payment, are enabled. For example, loyalty and other awards programs operated, maintained, or otherwise accessed by either or both of secure payment server(s) 102 and third-party loyalty program administrators 120 may be accessed in connection with transactions conducted by merchant(s) 104.

Thus, for example, when transaction information has been provided to a payment processing server 102, and priorto or as part of payment processing, a payment authorization request, an awards benefit authorization, or both, may be provided to either or both of an associated loyalty program server 102-12 and a third-party loyalty rewards program server(s) 120, in order to request payment using previously- or contemporaneously-awarded loyalty benefits, or to enable consideration and/or award of new or additional rewards benefits.

In some cases, pre-paid and/or loyalty program benefits may be transferred from one purchaser to another, for use by that other purchaser in completing a transaction. Such transfer may be effected in different ways. For example, it may be possible to transfer payment information from the purchasing purchaser to a recipient of a gift card so that, when the gift card recipient attempts to make payment at a vendor POT terminal, such recipient may be able to access an authorized pre-paid account card in their own purchaser profile at the payment processing server. Alternatively, an authorized pre-paid card may remain in the purchaser profile of the original purchaser, but an icon or entry may be generated in the program application of the recipient's mobile device so that access to the prepaid account card may be given (in this case payment processing may still be routed through the original purchaser's virtual wallet, but at the instigation of the other purchaser during a transaction).

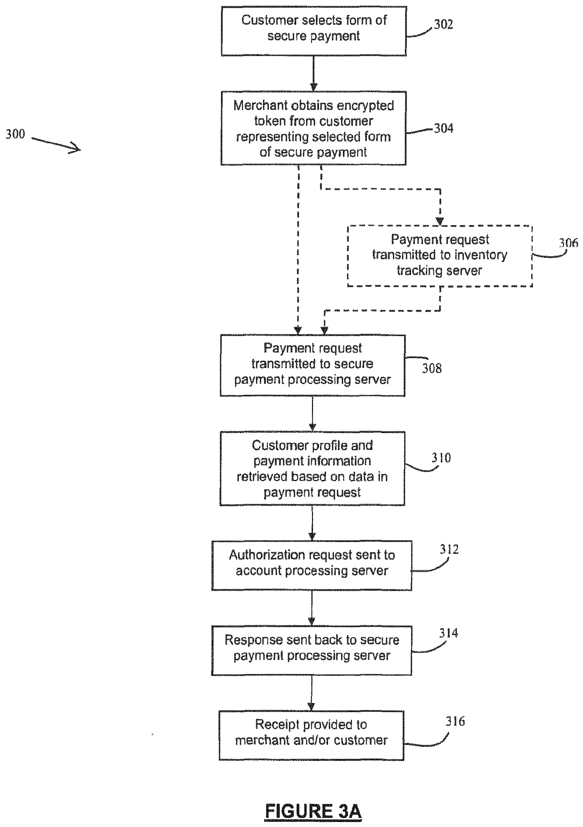

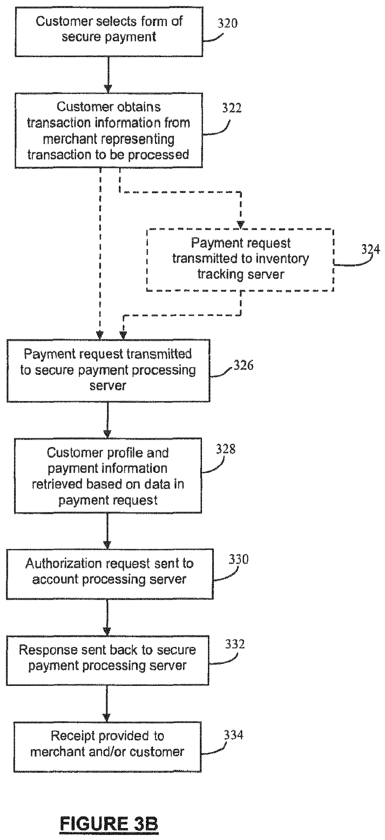

Examples of transactions enabled by systems and processes according to the disclosure are illustrated with reference to FIGS. 3 - 5. Such illustrated transactions are for illustrative purposes only and do not limit the available number and/or type of transactions that such system(s) and process(es) enable.

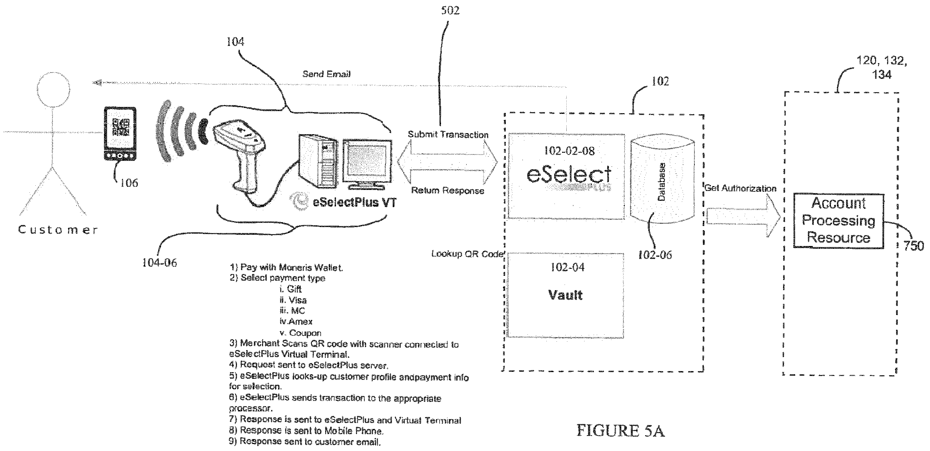

FIGS. 3A and 5A illustrate an example transaction in which data representing a secure payment token is provided by a purchaser device 106 to a vendor POT system 104-06 for processing by a secure payment host system 102, in order to facilitate completion of a purchase transaction in a secure payment environment 100 (FIG. 1).

In the example shown in FIG. 5A, a customer controlling a purchaser device 106, being located on premises of a vendor, such as a store, wishes to complete a purchase transaction. Having, for example, approached a vendor POS system 104-06 at a counter with a number of items to purchase, the customer (or purchaser) activates a secure payment application resident on the purchaser device 106. For example, using such application, the purchaser requests secure payment using credit, debit, and/or other account information stored in a virtual wallet data set stored in a secure database 102-04 of a secure payment system 102.

Accordingly the purchaser is presented, via the secure payment application executing on his purchaser device 106, with a suitably-configured application interface screen offering, according to options and previously-established authorizations available in his personal wallet data set, any one or more of a range of available payment options, including for one or more pre-paid accounts such as virtual gift cards or coupons, credit accounts, debit accounts, or rewards programs.

In the example of FIG. 3A, at 302 the purchaser selects one or more forms of payment, and the application resident on his device 106 generates an encrypted code, such as a suitably-configured QR code, for presentation to the vendor POS system 104-06, for use in authenticating the proposed form of payment to the satisfaction of the vendor. Such encrypted token may, for example, be generated by the secure payment application running on the purchaser device 106, using one or more algorithms configured to cooperate with corresponding applications executed by secure payment host 102. Such token may be generated by the purchaser device 106 acting alone, or in active, real-time cooperation with the payment host 102.

For example, a secure, multi-transaction, purchaser-unique token may have been previously stored in memory on or otherwise accessible by the purchaser device 106, for general use in connection with transactions processed by server 102 on behalf of the purchaser, and read by the application upon selection by the user of a desired payment type.

Alternatively, selection of a desired payment type by the user may cause the application to generate a request for a transaction-specific token to be generated by secure processor 102, the request being forwarded to the processor 102 via, for example, a wireless access point 104 and/or communication network 180 directly to the secure host system 102. Upon receipt, the secure processor 102 can generate a transaction-specific token and return it to the requesting purchaser device 106.

At a minimum, the token generated at 302 is decryptable and/or otherwise interpretable by secure payment host system 102 in such manner as to convey information sufficient to allow the secure payment system 102 to determine whether purchaser should be authorized, e.g., financially, to complete the transaction. This type of token may be passed at the beginning of a transaction where, for example, a receipt or other itemized listing of items or services involved in a transaction is to be generated.

Alternatively, a token encoded to convey completed transaction information can be passed, more generally at the time when the purchaser and vendor are ready to complete the transaction. In such case, information passed by the token can be sufficient in itself to enable to secure payment processor 102 to determine whether the complete transaction should be authorized. In such case the token can represent information sufficient to, for example, identify both the purchaser and the vendor, including any required or otherwise applicable account information; one or more prices associated with the transaction; and optionally any item lists suitable for generating receipts, controlling inventory, etc; and any surcharges such as tax, etc.

When a suitably-configured token has been generated or otherwise acquired by the secure payment application executing on the purchaser device 106, at 304 it can be provided to the vendor POS system 104-06. For example, a QR code generated in response to the request made at 302 can be displayed on a screen of a smart phone or other mobile device, and read by a corresponding scanner associated with POS system 104-06. Alternatively, such token can be transmitted and read via an RFID system, a bar-code scanner, a card reader, or provided in any other manner consistent with the purposes disclosed herein. For example, a user can use a keyboard provided on one or more special-purpose or general-purpose keys on a keypad or keyboard provided either key on the purchaser device 106 or the vendor POS system 104-06, or some combination thereof, to enter one or more alphanumeric characters, and/or or other symbols, directly to the POS system 104-06.

Having acquired the token supplied by the purchaser / purchaser system 106 at 304, the vendor system 104 can provide the token to the secure payment processor 102. Signals representing the token can, for example, be forwarded to the processor 102 via a secure payment pipeline 502 established between the vendor system 104 and the payment processor 102, using, for example, a secure gateway 102-08; optionally in such manner that vendor system 104 is prevented from storing, interpreting, or otherwise processing the token, or any other transaction-related data, other than to communicate it to the secure payment host 102.

In general, such secure communication pipelines may be established by, and between, a vendor system 104 and a secure payment host gateway 102-08, in such manner as to allow both vendor and customers to communicate securely, privately, and separately with the secure payment host 102, using input and output communications facilities of the vendor POS system 104-06. For example, such a pipeline 502 may be used to enable secure, direct, and separate communications by a purchaser with a secure payment host 104, in such manner as to allow the purchaser to communicate directly with the secure payment host 104 using input and output functions and devices associated with the vendor system 102, without the vendor system 102 being allowed to store, access, or otherwise process any secure or private purchaser information. At the same time, such pipeline 502 can allow the vendor to communicate with the same secure payment host without exposing private or otherwise sensitive information to the purchaser. This can, for example, allow the secure payment host to act as a payment agent for the vendor in completing the transaction: from the vendor's point of view, all that is necessary, in some embodiments, is for the secure payment host to assure the vendor that the secure payment host is satisfied that the purchaser will provide valid payment for goods or services received, so that the vendor can be removed from concern as to the validity of payment.

Secure pipelines suitable for use in implementing the disclosure can be implemented in the form of remotely-executed applications hosted by secure payment hosts 102, which can, upon invocation, set up secure communications connections, or sockets, with a requesting vendor system 102, 102-06. Alternatively, more rapid and/or more secure connections may be established by implementing vendor-ends of such pipelines in the form of applications resident within and executed by vendor system(s) 104, 104-06, which interact with corresponding applications executed by target host systems 102 in establishing secure communications connections.

An example of a secure pipeline system 502 adapted for use in secure transaction communications that is now available commercially is the eSelect® system provided by Moneris Solutions Corporation.

Among the many advantages offered by systems, methods, and processing in accordance with the disclosure are the options, in various embodiments, of building and completing transactions, of establishing real-time or pseudo real-time (synchronous or asynchronous) connectivity and/or interactivity between a purchaser mobile device 106, a vendor POS system 104-06, and, optionally, a secure payment host 102. With such connectivity and/or interactivity, receipts, lists, and records of purchased items may be generated ('built') on any or all of the purchaser mobile device 106, the vendor system 104, and the secure payment host 102 during processing of a transaction.

For example, as either or both of a purchaser mobile device 106 and a vendor POS system 104-06 process each item being purchased, data representing those items may be added to one or more data sets representing lists generated on or provided to a purchaser mobile device 106. Such lists and receipts can, for example, be generated using QR or bar-code scanners and/or other input devices provided by either the merchant/vendor POS system 104-06 or the purchaser device 106. For example, scanners associated with either a purchaser mobile device 106 or a merchant POS system, or both, can be used to scan QR or bar codes associated with purchased items, and/or labels affixed thereto, and forward associated data or signals for processing as part of a transaction. Scanned information can be passed directly from the purchaser system 106 to the merchant system 104, or may be transmitted via a secure payment host system 102 if, for example, customer privacy or security is desired independent of merchant system(s) 104.

Among the many advantages offered by systems, methods, and processing in accordance with the disclosure is the option, in various embodiments of building and completing transactions, of providing data representing items purchased, or otherwise removed from a vendor premise, to a secure payment host 102 / inventory tracker 102-10 for use in inventory tracking and/or control processes. For example, either in real time during a transaction process, or as a batch upon completion of a transaction, one or more data sets identifying item(s) removed from the vendor premises may be forwarded to the host 102, together with one or more identifiers associated with the vendor and/or premises. Such identifiers can be used by the processor 102-02 to access a vendor-specific data set stored in a secure merchant database 102-06, and thereafter to update a data set representing that vendor's inventory, and/or to initiate or further any desired re-ordering or other inventory control processes.

Thus, when at 304 a vendor system 102 has acquired a token useful for establishing a secure payment transaction from the purchaser device 106, at 308 the vendor system 104 can forward the same or other signals representing the token, along with any other required and/or desired data signals, to the secure payment system 102 designated by the purchaser. Optionally, as shown in FIG. 3A, at 306 the same or other signal(s) can be provided to a transaction processor 102-02 serving as an inventory tracking server controlling a corresponding merchant database 102-06.

In either case, when the process of assembling transaction data at the vendor POS system 104-06 has been completed, at 308 data sufficient for completing the transaction is forwarded, or otherwise made available, to secure payment host 102 for processing. As disclosed herein, data provided at 308 can include data useful for identifying one or more purchaser payment accounts, the payee vendor, a total price, and optionally any further desired data, including for example any applicable taxes or other surcharge(s).

In many circumstances, it can be advantageous for data transferred at 308 to be transferred by means of a secure data pipeline 502, as disclosed herein. For example, upon generation of a secure token at 302, a secure pipeline connection 502 can be established between a vendor POS system 104-06 and a secure gateway 102-08, passing through merchant or vendor server(s) 104-00 while preventing the vendor server(s) 104-00 from storing, interpreting, or otherwise processing the secure payment data.

At 310, the secure payment processor 102 can use the transferred transaction data to obtain payment authorization and confirm for the benefit of vendor system 104 and/or purchaser device 106 that the transaction is approved. Specifically, for example, the secure payment processor 102 can confirm to both vendor system 104 and purchaser device 106 that payment by the purchaser for desired goods is approved, and the transaction is completed, or can be completed by the vendor 102 and/or purchaser 106.

For example, at 310 a secure transaction processor 102-02 can interpret the transferred token signals to identify the purchaser, or at least one or more accounts associated with the purchaser that have been identified for use in closing the transaction; to look up one or more purchaser profile(s) or wallet(s) associated with the identified purchaser/purchaser accounts in a secure database 102-04, and extract data identifying one or more corresponding third-party payment system(s) 120, 132, 134 associated with account(s) designated by the purchaser for use in closing the proposed transaction.

At 312, the secure payment processor 102 can forward to the corresponding third-party payment system(s) 120, 132, 134 suitably-configured data to request authorization by the payment system(s) 120, 132, 134 for payment on the transaction. In doing so, for example, the secure transaction processor 102-02 can forward to the designated third-party system(s) 120, 132, 134 via a secure gateway 102-08, data interpretable by the designated third-party system(s) 120, 132, 134 and sufficient for identifying one or more designated payment accounts, and a total amount to be deducted from such account(s), either in terms of cash, rewards points, etc.

Designated third-party payment processor(s) 120, 132, 134 can interpret received authorization request(s) to identify corresponding payment account(s) associated with the designated purchaser, determine whether sufficient funds, points, etc., are available in the account(s), and at 314 return to the requesting secure payment system 102 signals representing either authorization for the transaction or, according to whether sufficient funds are available in the designated account(s), a refusal.

At 316, the secure payment processor 102 can receive and interpret the authorization / decline signal(s) generated by the designated third-party payment processor(s) 120, 132, 134. Depending upon whether the transaction was authorized or declined, suitable signals can be transmitted to the requesting vendor and/or purchaser systems 104, 106.

Whether signals generated and forwarded at 316 by secure payment processor 102 represent authorization for a transaction or refusal, it can be advantageous, in many embodiments, for signals forwarded to either or both of vendor system 104 and purchaser system 106 to be configured for interpretation and output in the form of virtual or physical receipts or notifications. Virtual receipts or notifications can be provided by, for example, means of data sets configured to be interpreted by vendor and/or purchaser system processors and output to associated displays on a suitably-adapted GUI screen. Physical receipts can be provided by, for example, outputting suitably-configured print commands to paper or other printers.

Virtual receipts or notifications may also advantageously be provided, in various embodiments, to either or both of purchaser systems 106, 106' and vendor systems 102, 102-06 by means of e-mail, SMS, or other text-based communication. Such receipts or notifications can be provided to any number of different addressees (entities/devices/locations), as authorized by the purchaser, vendor, or both.

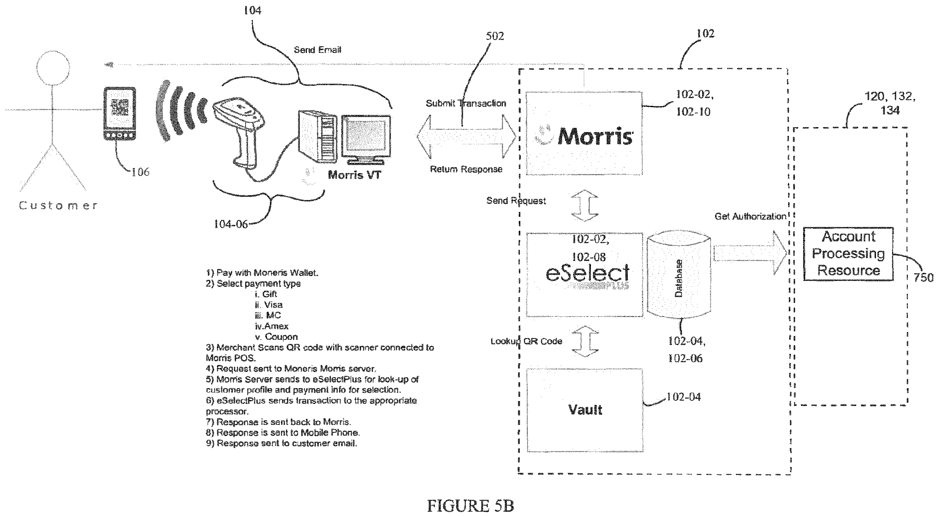

FIG. 5B further illustrates an example of a transaction in which one or more merchant-specific inventory-control data sets are maintained within the secure payment system 102. In the embodiment shown, an inventory control server 102-10 serves as a gateway for payment-processing components of a secure payment system 102, by receiving transaction data signals via a secure communications pipeline 502 and passing on payment authorization request data to a payment processing server 102-02' which controls access to secure database "Vault" 102-04 and databases 102-04, 102-06, and controls exchange of payment authorization signals with third-party account servers 120, 132, 134.

In such embodiments, as well as others, inventory-control server(s) and databases 102-10, 102-06 can interpret signals received via secure communications pipeline and, by using such signals to access merchant-specific inventory-control data sets, can provide merchant system(s) 102 with the ability to track and control inventory levels by monitoring sales, wastage, and other dispositions of existing inventory items, tracking prices paid for items, and controlling ordering, shipping, and other handling of new inventory.

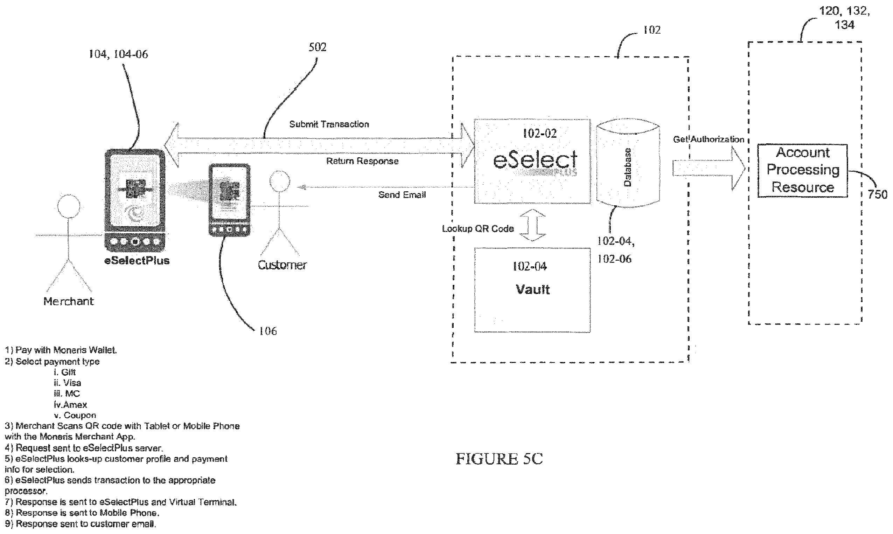

FIG. 5C illustrates an example of a transaction in which some or all of merchant system 104, including at least merchant POS system 104-06, is implemented on a mobile device such as a tablet or laptop computer or smart phone. In the embodiment shown, a secure transaction token is generated by either or both of purchaser device 106 and secure payment host 102, and acquired by merchant POS system 104-06 from a display screen of purchaser device 106. From the mobile merchant POS system 104-06, the transaction data set is forwarded to secure payment system 102 via at least partially wireless means, using suitably-adapted security measures such as wireless encryption protocols.

In the embodiment shown, acknowledgment of the completion of the transaction, or a decline notification, is provided to the purchaser mobile device 106 by means of a suitably-configured e-mail message.

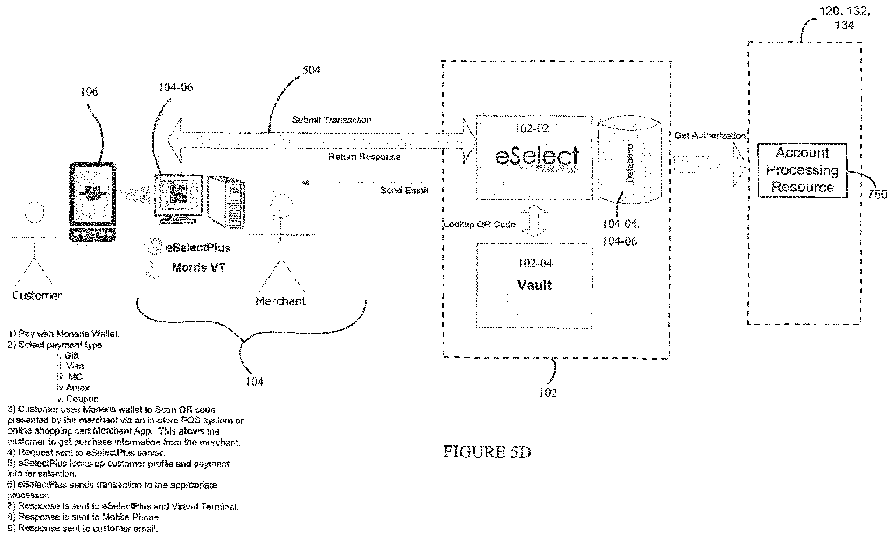

FIG. 5D illustrates an example of a transaction in which a purchaser device 106 is used to scan or otherwise acquire a transaction token presented or otherwise made available by a merchant or vendor POS system. A merchant system 102, 102-06, either before, during, or at the end of a proposed transaction, can generate a token representing data that may be provided to and interpreted by a secure payment system 102, and optionally by the scanning purchaser device 106 as well, as representing data useful in completing a proposed transaction.

For example, upon completion of a transaction, a merchant system 104 can generate a token interpretable as representing at least suitable payee account information and a total amount of funds due, and optionally additional data such as a list of items purchased, individual prices and quantities of such items, and rewards program information. Such token may be displayed upon an output screen of a vendor POS system, and read by a suitable token-reading component of a purchaser device 106. For example, a smart phone operating a secure payment application (e.g., a virtual wallet application") acquired from a secure payment system 102 can cause a camera component of the smart phone, coupled with a QR code-reading algorithm operated by a smart-phone processor, to read a suitably-configured QR code presented by the merchant device 104-06.

The secure payment application operating on the purchaser mobile device 106 can then use an encrypted and/or otherwise secure communications connection 504 with secure payment host 102 to forward at least the information acquired from the vendor POS system 104-06 to the payment host 102 to request authorization payment. In many embodiments, information acquired from the vendor system 104 will be coupled, by the purchaser device 106, with information designated by a user of the purchaser device 106 to identify one or more accounts controlled by or otherwise accessible to the user for use in providing payment for the transaction.

Upon receipt of such transaction information, secure payment system 102 can process a request for payment authorization, and optionally implement any inventory control processes, as described herein, and can provide notification(s) of such authorization and/or refusal to either or both of purchaser device 106 and vendor system 104.

An example of a process suitable for use in implementing such embodiments of the invention is shown in FIG. 3B.

In the example of FIG. 3B, at 320 the purchaser selects one or more forms of payment available through account information stored in a secure storage facility (i.e., a vault) 102-04, and a secure payment application resident on his device 106 enters a waiting state in which it waits for presentation of a suitably-configured transaction code, such as an encrypted QR code, by a vendor POS system 104-06, for use in authenticating authorization of the proposed form of payment to the satisfaction of the vendor.

At 322, automatically or upon command from the user, the purchaser device 106 reads a transaction code from a vendor POS system 104-06. Such encrypted token may, for example, be generated by application(s) running on the vendor system 104; a secure payment system 102 designated by the purchaser using a purchaser device 106 and/or a corresponding vendor POS system 104-06; or by both the secure payment system 102 and the vendor system 104. Such secure token may for example represent information sufficient to enable the designated secure payment system 102 to correctly identify a payee account associated with the vendor system 102, and a total amount to be charged against a designated purchaser account to complete the transaction.

On the vendor side, the secure payment application may be executed, and a transaction token generated and/or displayed, by any or all of the various components comprised by the particular vendor system 102. Such devices may, example, include at least a POS device 104-06 comprising a desktop or other counter-type device such as a desktop computer system, server-based terminal, or cash register.

At 326, the purchaser device 106, having acquired the token supplied by the vendor POS system 104-06 at 322, provides information represented by the token to the secure payment processor 102. Such information can consist solely of information provided by the vendor system 104, but may also include further information identifying one or more accounts designated by the purchaser for satisfaction of the user's obligations in the transaction, and any other desired or required information.

Optionally, at 324 the purchaser device 106 can provide the same or further details of the transaction, including for example any or all of the identities and quantities of items purchased, prices to be paid, etc., to one or more inventory tracking servers 102-06 (see, e.g., FIG. 5B).

In either or both cases, transaction information can be provided or otherwise made available for secure payment host 102 via a secure communications pipeline 504.

At 328, the secure payment processor 102 can use the transferred transaction data to obtain payment authorization and confirm for the benefit of vendor system 104 and/or purchaser device 106 that the transaction is approved. Specifically, for example, the secure payment processor 102 can confirm to both vendor system 104 and purchaser device 106 that payment by the purchaser for desired goods is approved, and the transaction is completed, or can be completed by the vendor 102 and/or purchaser 106. Either or both such notifications can be made in any desired form, including for example via e-mail to the vendor system 104.

For example, at 328, a secure transaction processor 102-02 can interpret the transferred token signals to identify the purchaser, or at least one or more accounts associated with the purchaser that have been identified for use in closing the transaction; to look up one or more purchaser profile(s) or wallet(s) associated with the identified purchaser/purchaser accounts in a secure database 102-04, and extract data identifying one or more corresponding third-party payment system(s) 120, 132, 134 associated with account(s) designated by the purchaser for use in closing the proposed transaction.

At 330, the secure payment processor 102 can forward to the corresponding third-party payment system(s) 120, 132, 134 suitably-configured data to request authorization by the payment system(s) 120, 132, 134 for payment on the transaction. In doing so, for example, the secure transaction processor 102-02 can forward to the designated third-party system(s) 120, 132, 134, via a secure gateway 102-08, data interpretable by the designated third-party system(s) 120, 132, 134 and sufficient for identifying one or more designated payment accounts, and a total amount to be deducted from such account(s), either in terms of cash, rewards points, etc.

Designated third-party payment processor(s) 120, 132, 134 can interpret received authorization request(s) to identify corresponding payment account(s) associated with the designated purchaser, determine whether sufficient funds, points, etc., are available in the account(s), and at 332 return to the requesting secure payment system 102 signals representing either authorization for the transaction or, according to whether sufficient funds are available in the designated account(s), a refusal.

At 334, the secure payment processor 102 can receive and interpret the authorization / decline signal(s) generated by the designated third-party payment processor(s) 120, 132, 134. Depending upon whether the transaction was authorized or declined, suitable signals can be transmitted to the requesting vendor and/or purchaser systems 104, 106.

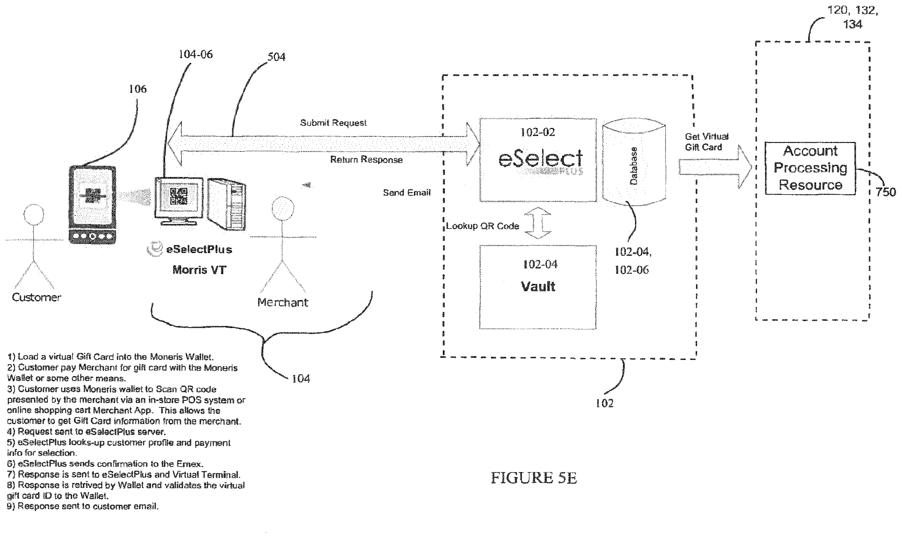

FIG. 5E illustrates an example of a transaction in which a purchaser who has previously acquired or been otherwise associated with a virtual gift card a rewards benefit account, or other account representing non-currency value which may be used in lieu of currency as payment for a transaction elects to pay through use of such virtual gift card, customer loyalty/rewards account, or other benefits account.

Having designated payment through such an account and either generated or otherwise acquired a suitable transaction token using a purchaser device 106, the user causes the transaction information, encrypted in the form of a QR token, to be transmitted to a payment host 102. In turn, payment host 102 communicates with rewards, gift-account, or other benefits server 120 to obtain authorization or denial of the transaction.

In the embodiment shown, acknowledgment of the completion of the transaction, or a decline notification, is provided to the purchaser mobile device 106 by means of a suitably-configured e-mail message.

In the embodiment shown, a suitable transaction token has been generated by a vendor system 104, and read or otherwise acquired by a purchaser device 106 for transmission to payment host 102. Those skilled in the relevant arts, having been made familiar with this disclosure, will understand that other processes disclosed herein, including for example those shown in FIGS. 5A-5D, may be adapted for processing based on the use of whole or partial payment using non-currency benefits, such as gift or rewards accounts.

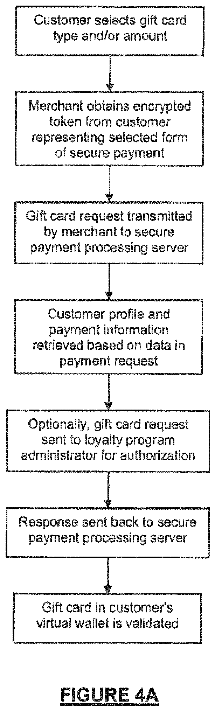

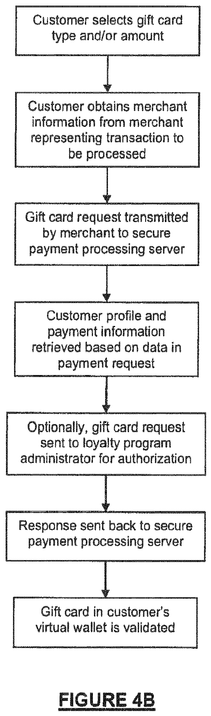

Examples of processes suitable for use in implementing secure payment using a virtual gift card, rewards points, or other benefits, information pertaining to which is stored in a purchaser's wallet in a secure database 102-04, are shown in FIGS. 4A and 4B. In FIG. 4A, a process which involves passing a suitably-configured transaction token from a purchaser device 106 to a vendor POS device 104-06 is shown. In FIG. 4B, a process in which a token is passed from a vendor POS device 04-06 to a purchaser device 106 is shown.

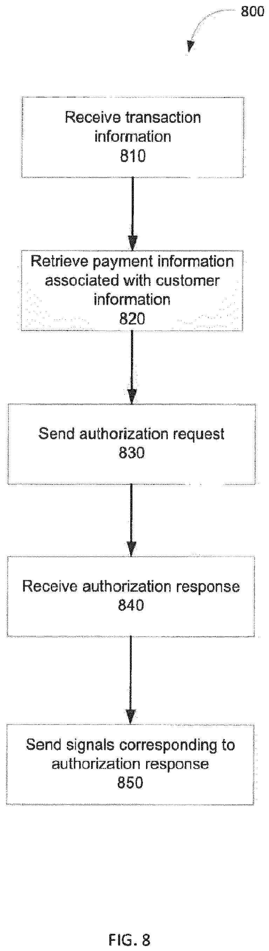

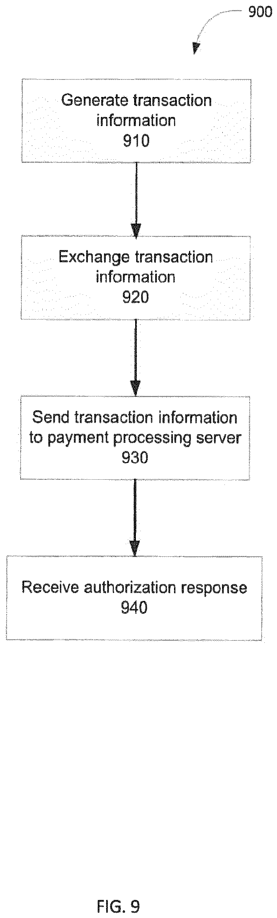

Figs. 8 and 9 show example methods for facilitating secure payment for a transaction which may be performed alternatively, additionally, or in accordance with any of the other examples described herein.

Fig. 8 shows an example method 800 which can be performed at one or more resources at a secure payment host system 102. In one example, the method can be performed on a payment processing server.

At 810, the secure payment host system 102 can be configured, by for example executing suitably-configured stored instruction data sets, to receive signals representing transaction information from one or both of a merchant device and a customer device. The merchant device may be any device controlled or operated by the merchant and may be a resource in the merchant system 104. In some examples, the merchant device may be owned by or leased from a payment processor or third party. In some examples, the merchant device can be a wired or wireless POS/POT terminal 104-06, device 106, or server 104-00. Likewise, the customer device may be any device 106 controlled or operated by the customer.

The transaction information can include purchase information and customer information. In some examples, purchase information may include a total transaction amount, and a merchant identifier. For example, signals representing at least a portion of the transaction information can be received in a data record or format such as:
<total transaction amount><merchant identifier>

In some examples, purchase information can include data representing one or more of a total transaction amount, a transaction type (e.g. purchase, return, adjustment, etc.) a list of item (items may include services) identifiers, quantities of each item, costs of each item, sales taxes, discount information, coupons, promotional information, loyalty reward information, special transaction terms, commissions, times, locations, and the like. For example, signals representing at least a portion of the transaction information can be received in a data record or format such as:
<item identifier A, item identifier B><cost A, cost B><quantity of A, quantity of B><merchant identifier>

In some examples, the transaction information can include merchant information with or separate from the purchase information. Merchant information can include data representing one or more of merchant identifiers, a merchant authorization, location identifiers, merchant device (e.g. POS/POT terminal, server) identifiers, merchant financial account identifiers, merchant loyalty reward account identifiers, merchant salesperson identifiers, and the like.

Customer information, in some examples, can include data representing one or more of a customer identifier, a payment method or type, an account identifier, and a customer authorization.

In some examples, purchase, merchant and customer information may be grouped in different logical or other groupings, or can be combined or classified differently than in the above examples. For example, instead of separate fields for a customer identifier and an account identifier, a single identifier may be used to identify a specific account which inherently corresponds to the customer.

For example, signals representing at least a portion of the transaction information can be received in a data record or format such as:
<customer identifier><account type = chequing/savings/other>
   or
<customer account identifier>

Transaction information can, in some examples, include one or more encrypted tokens, data strings, and/or identifiers. Some of the transaction information can include tokens, identifiers, or surrogates/substitutes for actual payment account information.

In some examples, a portion or all of the transaction information can be encrypted, and may include one or more tokens generated by the merchant device and/or the customer device. For example, the transaction information can include an encrypted token which includes data corresponding to customer information. In some examples, the transaction information can include information for verifying the credentials/identities of the merchant device, the customer device, and/or their operators.

The secure payment host system 102 may, in some examples, be configured to decrypt the transaction information and/or verify the credentials/identities based on the transaction information.

In some examples, customer or merchant authorizations or verification may be inherent in the encryption scheme used to encrypt the transaction information.

At 820, the secure payment host system 102 can be configured to retrieve payment information associated with the customer information from a secure customer database associated with the payment processing server. The associated secure customer database can include, for example, a database within the secure payment host system 102, or an external database with a secure or encrypted connection to the secure payment host system 102.

The retrieved payment information can include one or more of bank account information, credit card information, gift card information and loyalty account information. In some examples, payment information can be retrieved by looking up or otherwise using customer and/or merchant information to identify the associated payment information.

In some examples, payment information can include actual account numbers, card numbers, personal identification numbers (PINs), expiry dates, security numbers, or any other information which may be required by a financial, loyalty or payment institution to complete a payment.

In some examples, merchant payment information can be retrieved in a similar manner from a merchant database or from the same database storing the customer information.

At 830, the secure payment host system 102 can be configured to send signals representing an authorization request to an account processing resource 750. An account processing resource can be a server, system, database, or other resource for facilitating a payment or transfer of funds between accounts. In some examples, the account processing resource to which the authorization request is sent can be based on the payment information. For example, if the payment information corresponds to a customer's credit card account, the authorization request can be sent to a credit card company's account processing resource. Similarly, if the payment information corresponds to a customer's bank account, the authorization request can be sent to the appropriate bank's account processing resource.

The authorization request include data corresponding to at least a portion of the transaction information and the payment information. For example, an authorization request can include a payment amount which can be a transaction amount received with or calculated from the transaction information, payee account information such as the merchant's account number, and a payor account information such as the customer's account number. In some examples, the data included in the authorization request can include verification information such as PINs, expiry dates, security codes, and the like.

In some examples, the authorization request can include a request to verify that funds are available and/or a request to reserved or transfer the funds. In some examples, the authorization request can be formatted or sent in accordance with standard formats or protocols for communicating with or as otherwise mandated by the financial institutions or loyalty reward systems.

At 840, the secure payment host system 102 can be configured to receive signals representing an authorization response indicating whether the authorization request has been approved. The authorization response can, in some examples, include an authorization indicator indicating whether the request was approved, an authorization code, confirmation number(s) and/or other information such as a message or code corresponding to a reason why the request was authorized or denied.

At 850, the secure payment host system 102 can be configured to send signals corresponding to the authorization response to one or both of the merchant device and the customer device. In some examples, the signals can include a subset of or the entire authorization response.

In some examples, the secure payment host system 102 can be configured to send signals corresponding to data corresponding to the authorization response. For example, the signals can correspond to a token or message indicating whether or not the transaction has been approved.

With this information, the customer and merchant can determine whether they can proceed with the transaction.

In some examples, the secure payment host system 102 can be configured to store or cache authorized payments, and to process or finalize a batch of transactions after or at a predetermined time (e.g. end-of-day reconciliation). For example, the authorization request may authorize a payment for completion; however, in some examples, the payment may not be processed until the system 102 sends or processes additional signals to an account processing resource representing request(s) to process the authorized payments. In some examples, this clearing and settlement process may be defined by standards or service-level agreements.

The secure payment host system 102 can, in some examples, be configured to generate receipt data based on the transaction information and/or the authorization response, and to send the receipt data to the merchant device, the customer device, and/or an electronic address associated with the merchant and/or customer (e.g. email address).

In some example, the secure payment host system 102 can be configured to generate receipt, customer, merchant and/or loyalty data based on at least a portion of the transaction information, and storing this data in one or more databases. In some examples this data can be used to drive loyalty programs or to set parameters or make business decisions based on customer spending habits.

In some examples, the secure payment host system 102 can be configured to host, control, store, or otherwise manage transaction information for facilitating a customer loyalty and/or gift program. In some examples, the system 102 can track historical transaction information and/or trends to initiate various reward programs or promotions.

Referring again to 810, in some examples, at least a portion of the transaction information can be received from the customer device via the merchant device. For example, as described herein, the customer device can send transaction information such as customer information to the merchant device which in turn can relay or otherwise send the customer information to the payment processing server.

In some examples, the payment processing server can establish a secure pipe for transfer transaction information from the customer device to the payment processing server via the merchant device. In some examples, the secure pipe can include encryption, tunneling protocols, VPN protocols, proprietary protocols, or any communication whereby the merchant device cannot access or decipher the information in the pipe.

In some examples, at least a portion of the transaction information can be received from the merchant device via the customer device. In some examples, this may also involve establishing and receiving information via a secure pipe.

The secure payment host system 102 can, in some examples, be configured to receive signals representing registration information including customer information and payment information. For example, a customer may set up or modify a customer profile including customer and payment information by providing input signals to a device which may be configured to send the corresponding registration information to the secure payment host system 102.

The secure payment host system 102 can be configured to store the new or updated customer and payment information in the customer database, which can be subsequently accessed for future transactions.

Fig. 9 shows an example method 900 which can be performed at a customer device, a resource of the secure payment host system 102 such as a merchant device, or both. In some examples, example method 900 can be implemented as part of one or more application programs on the customer and/or merchant device.

At 910, a customer device can be configured to generate transaction information. In one example, the customer device can receive an input indicating a selection of customer information such as a type or method of payment. Data corresponding to transaction/customer information can be generated based on the input. In some examples, generating the transaction information can include encrypting the information as a token, data string or other format. In some examples, the encryption or tokenizing process can include RSA codes, QR coding, user verification, or other security-related processes.

Similarly, transaction information can be generated at a merchant system. For example, a merchant device can receive inputs signals identifying items for purchase and their respective costs. Data corresponding to transaction/purchase information can be generated based on these inputs. In other examples, customer information and purchase information may be generated at either a merchant device, a customer device, or both.

In some examples, generating the transaction information can include encrypting, tokenizing, calculating, formatting, converting or otherwise gathering and preparing information for use by the secure payment host system 102.

At 920, the customer and merchant devices can be configured to optionally exchange transaction information. For example, a customer device can be configured to send transaction information generated at the customer device to the merchant device, and/or to receive transaction information generated at he merchant device. Similarly, the merchant can be configured to send its generated transaction information to the customer device and/or to receive transaction information generated at the customer device. This exchange of transaction information can be a one-way exchange, or a two-way exchange.

For example, in Fig. 5A, the customer device 106 generates transaction information in the form of a QR code which is transferred to the merchant device 104, 104-06 using a scanner. In other examples, the exchange of transaction information can be performed over Bluetooth, NFC, Wi-Fi, IR, or any other suitable wireless or wired connection.

At 930, the customer and/or the merchant device can be configured to send signals representing some or all of the generated transaction information to a resource in the secure payment host system 102 such as a payment processing server. The transaction information can include purchase information and customer information which can correspond to payment information stored in a customer database accessible by the payment processing server.

In some examples, the customer and/or the merchant device can be configured to establish a secure pipe through which at least a portion of the transaction information can be sent.

In some examples, the customer device can be configured to send transaction information to the payment processing server via the merchant device. In some examples, the transaction information can be sent through the secure pipe and/or through the exchange 920 of transaction information (e.g. QR code scanning) as described above.

At 940, the customer and/or the merchant device can be configured to receive signals corresponding to an authorization response generating by an account processing resource based on the payment information.

In some examples, the customer and/or the merchant device can be configured to generate or receive a transaction receipt based on the transaction information.

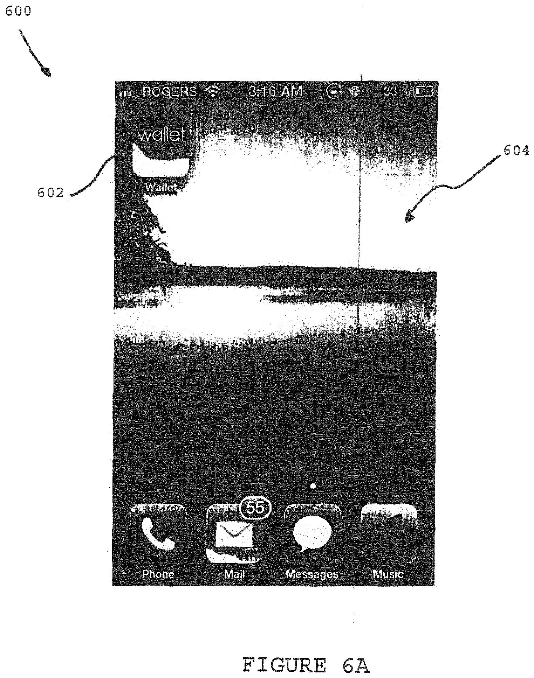

Referring now to FIGS. 6A to 6H, there are shown screen captures of user interfaces (Ul) generated by or otherwise used in association with an example embodiment of an application program installed and operating on a purchaser device, such as purchaser device 106 (FIG. 1), for providing secure payment within a secure environment 100. The screen captures depicted may represent what is displayed to a user on a screen display 600 of purchaser device 106 and are merely exemplary in nature of the possible configurations of application programs that may be utilized in accordance with the disclosure.

FIG. 6A illustrates an icon 602 associated with a wallet program that may be used by the user of purchaser device 106 during transactions with merchant system 104. Icon 602 may be installed on the desktop of background 604 of purchaser device 106 to be accessible by the user for launching the wallet program. For example, if purchaser device 106 is equipped with a touch screen, then the wallet program may be launched by the user of purchaser device 106 touching screen display 600 at the appropriate location of icon 602. Alternatively, one or more other input-output device enabled on purchaser device 106, such as a cursor or pointing device, may be used.

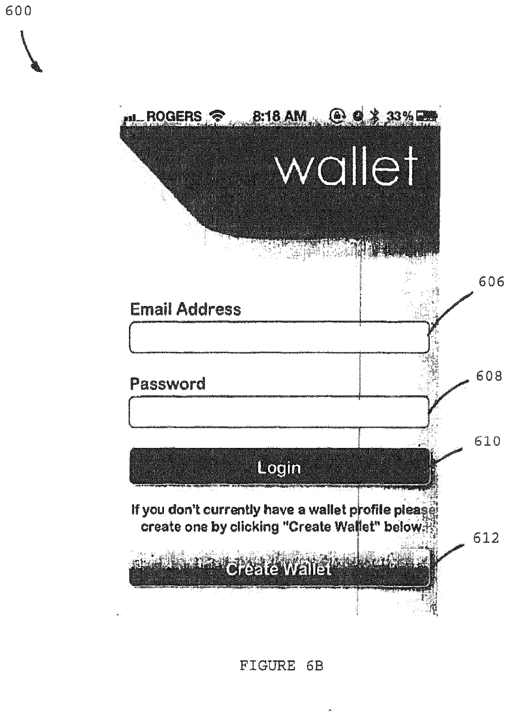

As seen in FIG. 6B, after launching a wallet program on purchaser device 106, a user may be presented with a start screen or other introductory display. In some cases, the start screen may provide the user with a number of different options, including login and registration options (in cases where the user does not have a pre-existing account registered. To login, the user may be able to enter a unique user identifier, such as an email address (or other equivalent) into a user name field 606 and a password into a password field 608. In the embodiment shown, user name field 606 is specifically for entry of an email address, but this may be varied as will be apparent.

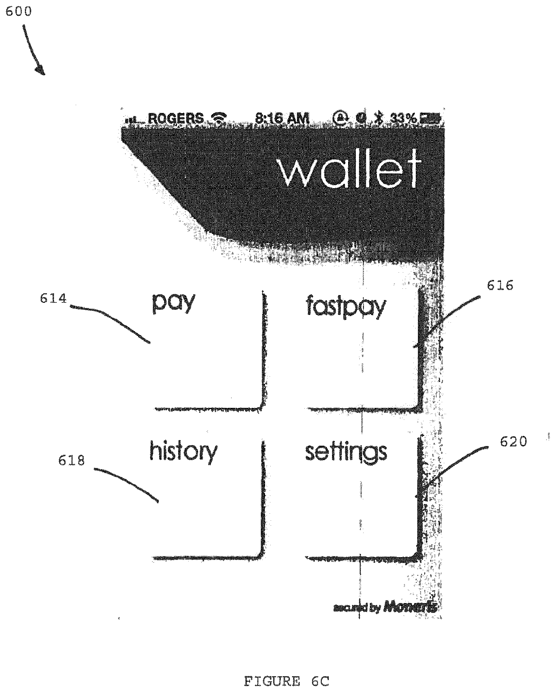

Data entered into the user name field 606 and the password field 608 may be submitted for verification using the login button 610. For example, by selecting the login button 610, data or signals represented the inputted information may be transmitted to host server 102 for verification against data records stored in customer database 102-04. Based on whether or not verification has been successful, host server 102 may then return data or signals to purchaser device 106 indicating the outcome of the verification. If successful, the user may be presented with one or more further displays (e.g., as shown in FIGS. 6C-6H); otherwise, the user may be directed to an error-processing screen (not shown) and given the option of re-entering data for re-verification.

If the user does not have a pre-existing account and would like to register a new account at host controller 102, create wallet button 612 may be selected, e.g., using any available input device enabled on purchaser device 106. Upon selection of button 612, the user may be directed to additional screens for entry of registration information and subsequent account creation. For example, the user may be prompted to enter (with optional verification) one or more of identification information (e.g., name, sex, age, email address, telephone number, mailing address), security information (e.g., password, security questions), financial information (e.g., credit card, bank car, pre-paid or other account card numbers), account settings, and so forth.

After entering in registration information, the wallet program may transmit data or signals to a payment processing server, such as host system 102, for storage in customer database 102-04 in a customer profile newly created for the registering user. After creation and storage in customer database 102-04, the user will then be able to access the virtual wallet by supplying matching information into the user name field 606 and password field 608.

In some embodiments, after successfully logging in to the wallet program, the user may be presented with an options menu, as shown in FIG. 6C, which includes a number of different icons, each such icon associated with a different corresponding option that is available to the user. For example, the user may be shown a pay icon 614, a fastpay icon 616, a history icon 618, and a settings icon 620. While these four example icons are included in the embodiment of an options menu shown in FIG. 6C, other options with corresponding icons may be also available within a wallet program in variant embodiments without limitation.

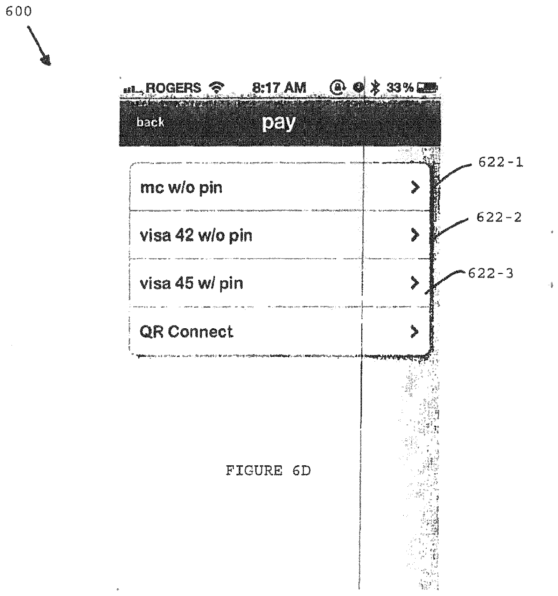

Pay icon 614 may be used to initiate secure payment for a transaction being completed between purchaser device 106 and merchant systems 104. When selected, the user may be directed to a pay options screen, shown in FIG. 6D, in which the user is given the option of selecting any of the pre-authorized forms of payment that have been registered in the user's secure wallet (e.g, which are stored in customer database 102-04).

Each available payment option may be associated with a different icon on the pay options screen used to designate that particular payment form. An informal name may also be displayed in association with each pay option icon so that the user is able to uniquely identify and distinguish one icon from the other. Thus, for example, as seen in FIG. 6D, three different pay option icons 622-1 ('mc w/o pin), 622-2 ('visa 42 w/o pin'), and 622-3 ('visa 45 w/ pin') are shown, although the number is variable according to the particular number of payment options that have been registered.

It may also be seen how the information names may reveal different details about each payment option to the user to facilitate differentiation. For example, the informal names for pay option icons 622-1, 622-2, 622-3, may reveal any or all of the following to the user: the type of payment option (credit card, bank card or pre-paid account card), the issuing authority of the payment option, optional differentiators in situations where two or more cards from the same issuing authority have been registered (which may include partial reproduction of a number associated with the payment card), as well as any other desired information, such as whether or not a personal identification number (PIN) is required to complete purchases using that particular payment card.

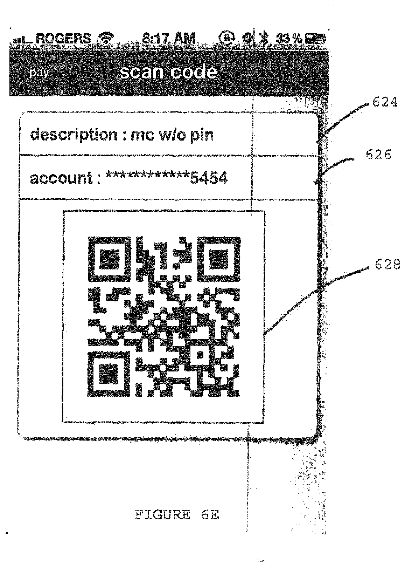

When a user selects one or more another icon on the payment options screen, the user may be directed to a corresponding scan screen, as shown in FIG. 6E, which is associated with the selected payment option. Each different scan screen may include a description field 624 that uniquely identifies the selected payment option, for example, using the same informal name appearing in the corresponding pay option icons 622-1, 622-2, 622-3. Thus, in the example shown, description field 624 reproduces the same informal name (i.e., 'mc w/o pin') that appears in pay option icon 622-1.

Account field 626 may include information indicating the unique number associated with the selected payment option. As shown, the unique number may be partially masked for greater security and so as not to inadvertently reveal sensitive customer information to other third parties who may happen to be within eyesight of purchaser device 106. In some cases, account field 626 may be used as confirmation for the user that a desired payment option has been selected, as opposed to another payment option that the user has mistakenly or inadvertently selected, or for any other purpose or reason.

Token field 628 may include and be used to make available a unique token, such as a QR code (in the example embodiment shown), for capture by a suitable scanning device at a POS/POT terminal or system within merchant system 104. As described above, in various embodiments, transaction information may be generated through (unilateral or bilateral) exchange of information between purchaser device 106 and merchant system 104 for completing a transaction. Thus, for example, the unique token displayed in token field 628 may be used to transmit any and all necessary information to merchant systems 104 required in different embodiments. The transferred information may include, for example, but not limited to, purchaser information to uniquely identify the purchaser (e.g., through cross-referencing with a corresponding customer profile stored in customer databases 102-04) and payment method information to indicate the selected payment type that is stored in the associated customer profile.

As described herein, use of the token displayed in token field 628 may act as a substitute or surrogate so that actual payment information (e.g., credit card or bank card numbers) do not have been to transmitted over potentially insecure communication network 180. In place of actual payment information, the displayed token may provide a lookup into the customer's associated profile, in which one or more data records representing actual payment information are stored.

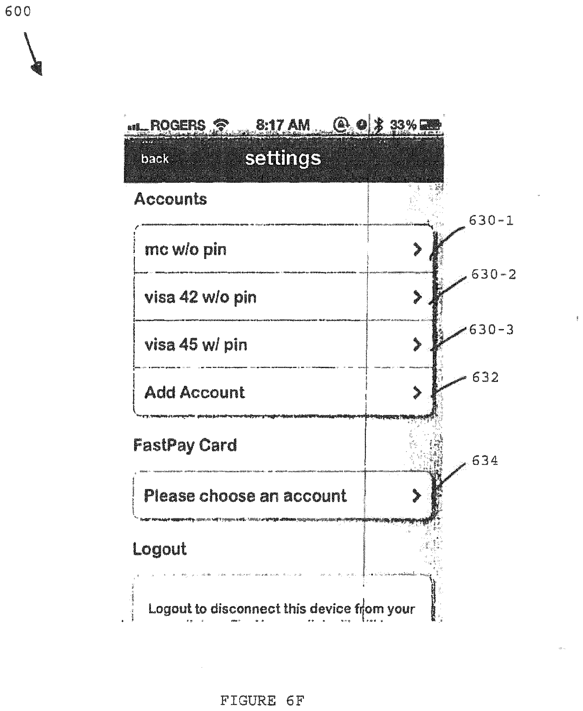

Referring back to FIG. 6C, the fastpay icon 616 may be used to initialize payment using one of the available payment options that the user has pre-selected for use as a fast-pay option. While pay icon 614 may allow the user with the option of selecting any available payment option, fastpay icon 616 may by-pass this option and revert immediately to a pre-selected one of the available payment options (described further in FIGS. 6F-6H below). Payment may thereby be more quickly processed by removing the number of different steps or selections required from the user so as to select the desired form of payment for a given transaction.

History icon 618 may be selected by the user in order to provide a display (not shown) of past purchases using the wallet program. Payment history may be organized in any different manner, including chronologically, and may comprise information relating to each different transaction that has been recorded. For example, date/time may be captured, as well as the location (e.g., with reference to merchant system 104) and total amount of each transaction. The selected form of payment may also be recorded, displayed and, optionally, used to provide a different or sub-organization of information.

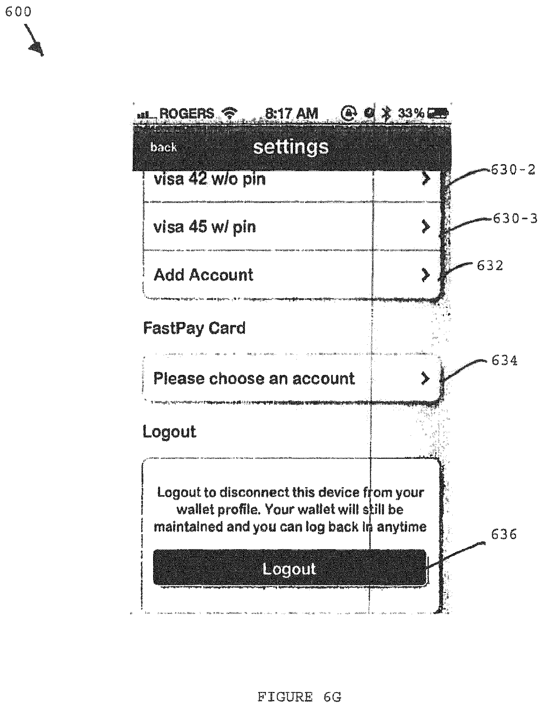

Settings icon 620 may direct the user to a settings screen, as shown in FIGS. 6F and 6G, which may be used by the user to edit or modify different settings associated with their virtual wallet. Settings screen may include one or more different fields 630-1, 630-2, 630-3 associated with settings for each different registered payment type. Through selection of a field 630-1, 630-2, 630-3, the user may, for example, modify any stored numbers or other information for that registered form of payment, including the type of payment card, expiration date, or any other associated information. The user may also be able to edit the information name displayed in associated with the given payment type.

Additionally, add account button 632 may be used by the user to add a new account to the wallet program, e.g., through submission of any and all financial information that may be required to register that particular form of payment.

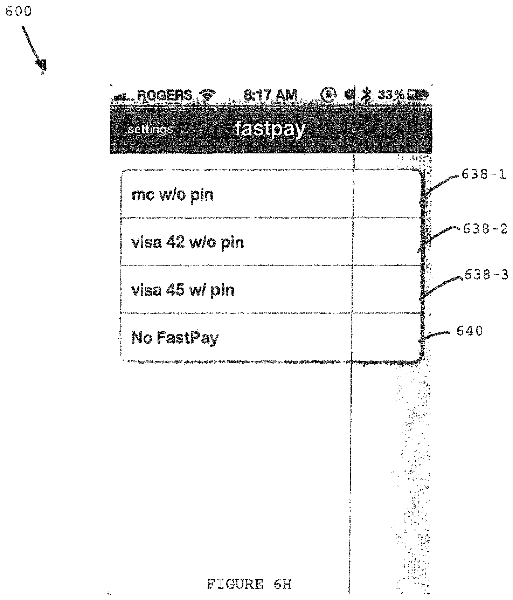

Fastpay card button 634 may direct the user to a fastpay selection screen, shown in FIG. 6H, in which the user may select one of the available payment options for future use as a pre-selected, 'fastpay' option. In the fastpay selection screen, the user may be presented with fastpay selection buttons 638-1, 638-2, 638-3 corresponding to the available payment options that have been registered in the user's wallet program. Through selection of one of these different buttons 638-1, 638-2, 638-3, the user may pre-select one of the available options to serve as the pre-selected 'fastpay' option. Once selected, payment using that particular payment type will be possible without having to explicitly select an option. For example, the user may designate a preferred or favoured payment type (that is more commonly used than others) as the 'fastpay' option.

Clear button 640 may be selected in situations where the user does not wish to designate any pay option as a 'fastpay option'. Selection of the clear button 640 will also erase any 'fastpay' option that the user may previously have set up. Any 'fastpay' option that is selected may also be displayed in fastpay card button 634.

Referring back to FIGS. 6F and 6G, a logout button 636 may also be provided to afford the user the option of logging out of the wallet program. Once logged out, it will generally be necessary for the user to log back in to the wallet program, e.g., by submitting name and password information into user name field 606 and password field 608, in order to complete further secure payments.

While the disclosure has been provided and illustrated in connection with specific, presently-preferred embodiments, many variations and modifications may be made without departing from the spirit and scope of the invention(s) disclosed herein. The disclosure and invention(s) are therefore not to be limited to the exact components or details of methodology or construction set forth above. Except to the extent necessary or inherent in the processes themselves, no particular order to steps or stages of methods or processes described in this disclosure, including the figures, is intended or implied. In many cases the order of process steps may be varied without changing the purpose, effect, or import of the methods described. The scope of the invention is to be defined solely by the appended claims, giving due consideration to applicable principles for construing the meaning of the terms used therein, such as the doctrines of equivalents, purposive construction, and related doctrines.

### ASPECTS OF THE INVENTION:

1. A method for facilitating secure payment for a transaction, the method comprising:
   receiving, at a payment processing server, signals representing transaction information from at least one of a merchant device and a customer device, the transaction information comprising purchase information and customer information;
   retrieving from a secure customer database associated with the payment processing server, payment information associated with the customer information;
   sending, to an account processing resource, signals representing an authorization request, the authorization request including data corresponding to at least a portion of the transaction information and the payment information;
   receiving, at the payment processing server, signals representing an authorization response indicating whether the authorization request has been approved; and
   sending signals corresponding to the authorization response to at least one of the merchant device and the customer device.
2. The method of claim 1, wherein at least a portion of the transaction information is received from the customer device via the merchant device.
3. The method of aspect 2, comprising: establishing a secure pipe through which at least the portion of the transaction information is received.
4. The method of any preceding aspect, wherein at least a portion of the transaction information is received from the merchant device via the customer device.
5. The method of any preceding aspect, wherein the signals representing the transaction information comprise an encrypted token including the customer information.
6. The method of any preceding aspect, wherein the transaction information includes an indication of a payment method selected at the customer device or the merchant device, and wherein retrieving the payment information comprises retrieving payment information associated with the payment method.
7. The method of any preceding aspect, wherein the payment information comprises at least one of credit card account information, bank account information, gift card information, and loyalty account information.
8. The method of any preceding aspect, comprising: sending receipt data to at least one of the merchant device, the customer device, an electronic address associated with the customer, and an electronic address associated with the merchant.
9. The method of any preceding aspect, wherein the transaction information comprises identifiers identifying at least one item or service to be purchased, and a corresponding cost.
10. The method of any preceding aspect, comprising: storing data corresponding to at least a portion of the transaction information in a receipt, customer, merchant, or loyalty database.
11. The method of any preceding aspect, comprising:
   receiving, at the payment processing server, signals representing registration information including the customer information and the payment information; and
   storing the customer information and the payment information in the customer database.
12. A method for facilitating secure payment for a transaction, the method comprising:
   sending to a payment processing server, signals representing transaction information from at least one of a merchant device and a customer device, the transaction information comprising purchase information and customer information, the customer information corresponding to payment information stored in a customer database accessible by the payment processing server; and
   receiving, at at least one of the merchant device and the customer device, signals corresponding to an authorization response generated by an account processing resource based on the payment information.
13. The method of aspect 12, comprising: receiving, from the merchant device, signals representing at least a portion of the transaction information at the customer device; wherein, sending the signals representing the transaction information comprises sending the transaction information from the customer device.
14. The method of aspect 12 or aspect 13, comprising: sending to the merchant device, signals representing at least a portion of the transaction information at the customer device; wherein, sending the signals representing the transaction information comprises sending the transaction information from the customer device via the merchant device.
15. The method of aspect 14, comprising: establishing a secure pipe through which at least the portion of the transaction information is sent.
16. The method of any of aspects 12 to 15, comprising: the signals representing the transaction information comprise an encrypted token including the customer information.
17. The method of any of aspects 12 to 16, wherein the transaction information includes an indication of a payment method selected at the customer device or the merchant device, the payment method corresponding to payment information stored in the customer database.
18. The method of any of aspects 12 to 17, comprising: generating or receiving, at the customer or the merchant device, a receipt based on the transaction information.
19. A server comprising: at least one processor configured for performing the method of any of aspects 1 to 11.
20. An electronic device comprising: at least one processor configured for performing the method of any of aspects 12 to 18.

## Claims

1. A method for facilitating secure payment for a transaction, the method comprising:
generating, at a customer device, an encrypted token for presentation to a merchant device as an optically scannable indicia for use in authenticating a transaction without exposing customer payment information to a merchant;
at a payment processing server, storing payment information of a customer in a secure customer database;
receiving, at said payment processing server, signals representing transaction information from a merchant device, the transaction information comprising purchase information and scanned indicia data representative of the encrypted token and omitting the payment information of the customer;
retrieving said payment information from said secure customer database based on the scanned indicia data representative of the encrypted token;
sending, by said payment processing server to an account processing resource, signals representing an authorization request, the authorization request including data corresponding to at least a portion of the transaction information and the payment information of the customer;
receiving, at the payment processing server, signals representing an authorization response indicating whether the authorization request has been approved; and
sending signals corresponding to the authorization response to at least one of the merchant device and the customer device;
wherein at least a portion of the transaction information is received from the customer device via the merchant device, or from the merchant device via the customer device using a scanner, Bluetooth, NFC, Wi-Fi, or IR.

2. The method of claim 1, comprising: establishing a secure pipe through which at least the portion of the transaction information is received.

3. The method of any preceding claim, wherein the transaction information includes an indication of a payment method selected at the customer device or the merchant device, and wherein retrieving the payment information comprises retrieving payment information associated with the payment method.

4. The method of any preceding claim, wherein the payment information comprises at least one of credit card account information, bank account information, gift card information, and loyalty account information.

5. The method of any preceding claim, comprising: sending receipt data to at least one of the merchant device, the customer device, an electronic address associated with the customer, and an electronic address associated with the merchant.

6. The method of any preceding claim, wherein the transaction information comprises identifiers identifying at least one item or service to be purchased, and a corresponding cost.

7. The method of any preceding claim, comprising: storing data corresponding to at least a portion of the transaction information in a receipt, customer, merchant, or loyalty database.

8. The method of any preceding claim, comprising:
receiving, at the payment processing server, signals representing registration information including the customer information and the payment information; and
storing the customer information and the payment information in the customer database.

9. The method of any preceding claim, wherein the payment token is a one-time use token generated for the specific transaction.

10. The method of any preceding claim, wherein:
when at least the portion of the transaction information is received from the customer device via the merchant device, a secure pass-through process prevents the merchant device from storing or accessing at least the portion of the transaction information; and
when at least the portion of the transaction information is received from the merchant device via the customer device, a secure pass-through process prevents the customer device from storing or accessing at least the portion of the transaction information.

11. The method of any preceding claim, wherein the optically scannable indicia is a QR code.

12. A server comprising: at least one processor configured for performing the method of any of claims 1 to 11.
